(19) Europäisches Patentamt
European Patent Office
Office européen des brevets

(11) EP 4 746 171 A1

(12) **EUROPEAN PATENT APPLICATION**

(43) Date of publication:
**20.05.2026 Bulletin 2026/21**

(21) Application number: **25215764.9**

(22) Date of filing: **14.11.2025**

(51) International Patent Classification (IPC):
***H01M 50/42*** (2021.01) ***H01M 50/443*** (2021.01)
***H01M 50/446*** (2021.01) ***H01M 50/449*** (2021.01)
***H01M 50/46*** (2021.01)

(52) Cooperative Patent Classification (CPC):
**H01M 50/449; H01M 50/42; H01M 50/443; H01M 50/446; H01M 50/461**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **16.11.2024 KR 20240163684**
**16.11.2024 KR 20240163682**

(71) Applicant: **SAMSUNG SDI CO., LTD.**
**Yongin-si, Gyeonggi-do 17084 (KR)**

(72) Inventors:
- **Choi, Hyeon Seon**
  **16678 Suwon-si, Gyeonggi-do (KR)**
- **Lee, Jung Seong**
  **16678 Suwon-si, Gyeonggi-do (KR)**
- **Jo, Jung Mo**
  **16678 Suwon-si, Gyeonggi-do (KR)**
- **Lee, Sang Heon**
  **16678 Suwon-si, Gyeonggi-do (KR)**
- **Kim, Cheon Soo**
  **16678 Suwon-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **SEPARATOR FOR RECHARGEABLE BATTERY AND RECHARGEABLE BATTERY INCLUDING THE SAME**

(57) Provided are a separator for a rechargeable battery, and a rechargeable battery including the separator. The separator for a rechargeable battery includes a porous substrate, and a coating layer located on at least one surface of the porous substrate. The coating layer includes a crosslinked product of a binder and a crosslinking agent, and a filler. The binder includes a (meth) acrylic binder, which includes a first structural unit derived from (meth)acrylic acid, (meth)acrylate, or a salt thereof, a second structural unit derived from a hydroxyalkyl (meth)acrylate, and a third structural unit derived from (meth)acrylamidosulfonic acid or a salt thereof. The crosslinking agent includes an aziridinebased crosslinking agent, and the filler includes a filler having a particle size (D50) in a range of 150 nm to 200 nm.



Processed by Luminess, 75001 PARIS (FR)

## Description

BACKGROUND

### 1. Field of the Disclosure

The present disclosure relates to a separator for a rechargeable battery, and a rechargeable battery including the separator.

### 2. Discussion of Related Art

With increasing presence of electronic devices using batteries such as, e.g., mobile phones, notebook computers, electric vehicles, and the like, the demand for secondary batteries having high energy density and high capacity is increasing. Therefore, improving the performance of rechargeable lithium batteries may be advantageous.

A rechargeable lithium battery typically includes a positive electrode and a negative electrode that contain an active material capable of the intercalation and deintercalation of lithium ions, and produces electrical energy by oxidation and reduction reactions when the lithium ions are intercalated into and deintercalated from the positive electrode and the negative electrode.

A rechargeable lithium battery may include a separator between the positive and negative electrodes. The separator is impregnated in the electrolyte and bonded to the positive or negative electrode. Therefore, it is desirable for the separator to have low thermal shrinkage within the electrolyte and low membrane resistance.

SUMMARY

The invention is defined by the appended claims. The description that follows is subjected to this limitation. Any disclosure lying outside the scope of said claims is only intended for illustrative as well as comparative purposes.

The present disclosure a separator for a rechargeable battery of which a dry heat shrinkage rate and a heat shrinkage rate in an electrolyte and membrane resistance are low, and ionic conductivity is high.

The present disclosure describes a separator for a rechargeable lithium battery, which exhibits desired or improved air permeability, a low heat shrinkage rate in an electrolyte, low membrane resistance, and high bending strength.

The present disclosure also describes a rechargeable battery including the separator for a rechargeable lithium battery.

Since the separator for a rechargeable battery according to one example embodiment has a low dry heat shrinkage rate, a heat shrinkage rate in an electrolyte, low membrane resistance, and high ionic conductivity, and thus the capacity, safety and lifetime of a battery may be improved.

The separator for a rechargeable lithium battery according to an example embodiment can increase the reliability of a rechargeable lithium battery by securing desired or improved air permeability, a low heat shrinkage rate in an electrolyte, low membrane resistance, and bending strength.

BRIEF DESCRIPTION OF THE DRAWINGS

The above and other objects, features and advantages of the present disclosure are more apparent to those of ordinary skill in the art by describing example embodiments thereof in detail with reference to the accompanying drawings, in which:

FIG. 1 is a cross-sectional view illustrating a separator for a rechargeable lithium battery according to one example embodiment;
FIG. 2 is a cross-sectional view showing a separator for a rechargeable lithium battery according to another example embodiment;
FIG. 3 to FIG. 6 are cross-sectional views schematically illustrating a rechargeable lithium battery according to one example embodiment; and
FIG. 7 is a schematic diagram of measuring the bending strength of a separator.

DETAILED DESCRIPTION

Hereinafter, example embodiments of the present disclosure are described in detail. However, these are presented as examples, and the present disclosure is not limited thereby, and the present disclosure is defined only

by the scope of the claims described below.

Unless otherwise specified herein, when a part such as a layer, a film, a region, or a plate is described as being "on" another part, this includes not only a case where the part is "directly on" the other part, but also a case where there is another part is present therebetween.

In the specification, "combination thereof" may mean a mixture, laminate, composite, copolymer, alloy, blend, and reaction product of components.

In the specification, "particle size (D50)" refers to an average particle size indicating the size of particles with a cumulative volume of 50 vol% in the particle size distribution. Particle size distribution may be measured by a method widely known to those of ordinary skill in the art. For example, the particle size distribution may be measured using a particle size analyzer, or by transmission electron microscopy or scanning electron microscopy. As another method, by using a measuring device that uses dynamic light-scattering, particle size may be measured using dynamic light-scattering, the number of particles may be counted for each particle size range through data analysis, and the D50 value may be obtained by being calculated from the above method.

Unless otherwise stated, the particle sizes D50 are measured using a laser diffraction method. When measuring by laser diffraction, for example, particles to be measured may be dispersed in a dispersion medium, irradiated with approximately 28 kHz ultrasonic waves at an output of 60 W by introducing it into a commercially available laser diffraction particle size measuring device (e.g., Microtrac MT 3000), and D50 may be calculated based on 50% of the particle size distribution using the measuring device.

If the above particle is spherical, the above size may mean the diameter.

In the specification, "(meth)acryl" means acryl and/or methacryl.

Unless otherwise defined below, .

The C1 to C3 alkyl group below is a methyl group, an ethyl group, or a propyl group. The C1 to C10 alkylene group may be or include, for example, a C1 to C6 alkylene group, a C1 to C5 alkylene group, or a C1 to C3 alkylene group, such as a methylene group, an ethylene group, or a propylene group. The C3 to C20 cycloalkylene group may be or include, for example, a C3 to C10 cycloalkylene group, or a C5 to C10 cycloalkylene group, such as a cyclohexylene group. The C6 to C20 arylene group may be or include, for example, a C6 to C10 arylene group, such as a phenylene group. The C3 to C20 heterocyclic group may be or include, for example, a C3 to C10 heterocyclic group, such as a pyridinyl group.

"Hetero" used herein refers to inclusion of one or more hetero atoms such as or including at least one of N, O, S, Si, and P.

In chemical formulas, the symbol "*" indicates a moiety that is connected to the same or different atoms, groups, or structural units. Unless specifically stated otherwise in a chemical formula shown herein, it may be assumed that hydrogen is bonded in the structure of the chemical formula.

"Alkali metal" used herein refers to an element belonging to Group 1 of the periodic table, such as lithium, sodium, potassium, rubidium, cesium, or francium, which may be present in a cationic or neutral state.

When specifying a numerical range in the specification, "X to Y" means "X or more and Y or less ($X \leq$ and $\leq Y$)."

Hereinafter, the separator for a rechargeable battery and rechargeable battery including the same of the present disclosure is described in detail.

Only the lithium rechargeable battery is described below. However, the present disclosure may also be applied to rechargeable batteries of heterogenous metal ions other than a lithium rechargeable battery.

## First separator for a rechargeable battery

The separator for a rechargeable lithium battery according to one example embodiment includes a porous substrate, and a coating layer located on at least one surface of the porous substrate. The coating layer includes a crosslinked product of a binder and a crosslinking agent, and a filler. The binder includes a (meth)acrylic binder, which includes a first structural unit derived from (meth)acrylic acid, (meth)acrylate, or a salt thereof, a second structural unit derived from hydroxyalkyl (meth)acrylate, and a third structural unit derived from (meth)acrylamidosulfonic acid or a salt thereof. The crosslinking agent includes an aziridine-based crosslinking agent, and the filler includes a filler having a particle size (D50) in a range of 150 nm to 200 nm.

According to one example embodiment, the coating layer may be or include a heat-resistant layer.

According to one example embodiment, the crosslinked product may be or include a thermally crosslinked product.

According to one example embodiment, the coating layer may be formed of or include a composition for a coating layer, which includes the (meth)acrylic binder, the aziridine-based crosslinking agent, and the filler having a particle size (D50) in a range of 150 nm to 200 nm.

The separator may have a low dry heat shrinkage rate, a low heat shrinkage rate in an electrolyte, and low membrane resistance, and high ionic conductivity.

The separator may have a dry heat shrinkage rate of 5% or less in each of the machine direction (MD) and the

transverse direction (TD).

The separator may have a heat shrinkage rate in an electrolyte of 15% or less in each of the machine direction (MD) and the transverse direction (TD).

The "MD" and "TD" mentioned above are the same directions as MD and TD of the porous substrate.

The separator may have a membrane resistance of 0.6 Ω or less.

The separator may have ionic conductivity of 0.65 mS/cm or more.

The separator may have an air permeability of 150 sec/100 cc or less.

Here, the air permeability is the time (sec) it takes for 100 cc of air to pass through the unit thickness of the separator. The air permeability per unit thickness may be obtained by measuring air permeability with respect to the total thickness of the separator, and then dividing the measured air permeability by the thickness. Air permeability was measured by measuring the time it takes for 100 cc of air to pass through each separator (units: sec) using a measuring device (EG01-55-1MR, Asahi Seiko).

A separator that includes the (meth)acrylic binder, but does not include an aziridine-based crosslinking agent as a crosslinking agent, or has a coating layer formed of or including a composition for a coating layer containing a crosslinking agent other than an aziridine-based crosslinking agent, may have an increased heat shrinkage rate in an electrolyte, thereby reducing the reliability of a battery. According to one example embodiment, the aziridine-based crosslinking agent may be included at 95 wt% or more, for example, in a range of 98 wt% to 100 wt%, or 100 wt% of the entire crosslinking agent in the composition for a coating layer.

A separator that includes the aziridine-based crosslinking agent, but does not include the (meth)acrylic binder, or has a coating layer formed of or including a composition for a coating layer containing the (meth)acrylic binder, may have challenges in the capacity, lifetime and safety of a battery due to a high heat shrinkage rate, high membrane resistance and high air permeability of the separator. According to one example embodiment, the (meth)acrylic binder may be included at 95 wt% or more, for example, in a range of 98 wt% to 100 wt%, or 100 wt% of the entire binder in the composition.

The filler includes a filler having a particle size (D50) in a range of 150 nm to 200 nm. When the particle size (D50) of the filler is less than 150 nm, there may be a challenge of increasing membrane resistance due to the high air permeability thereof. When the particle size (D50) of the filler is more than 200 nm, there may be a challenge that it is difficult to secure heat resistance due to the low coating density thereof. The separator is increased in coating density to secure a thin coating layer, and has the filler having a particle size adjusted to secure a heat shrinkage rate, membrane resistance, and ionic conductivity. According to one example embodiment, the filler having a particle size (D50) in a range of 150 nm to 200 nm may be included at 95 wt% or more, for example, in a range of 98 wt% to 100 wt%, or 100 wt% of the entire filler in the composition.

**Coating layer:**

The binder includes a (meth)acrylic binder, which includes a first structural unit derived from (meth)acrylic acid, (meth)acrylate, or a salt thereof, a second structural unit derived from a hydroxyalkyl (meth)acrylate, and a third structural unit derived from (meth)acrylamidosulfonic acid or a salt thereof.

According to one example embodiment, the (meth)acrylic binder may be or include a non-adhesive binder.

The (meth)acrylic binder may fix the filler on a porous substrate, may allow the coating layer to be attached to the porous substrate and electrodes, and may contribute to improvement in the heat resistance, air permeability and oxidation resistance of the separator. In addition, the (meth)acrylic binder may facilitate the migration of lithium ions, reduce membrane resistance, improve ionic conductivity, increase the adhesion of the coating layer to the porous substrate and the electrodes, and increase the dispersibility of the filler in the coating layer. In addition, the (meth)acrylic binder may provide a separator exhibiting low membrane resistance to the coating layer including a filler to be described below.

The total of the first structural unit, the second structural unit, and the third structural unit may be included at 95 mol% or more, for example, in a range of 95 mol% to 100 mol%, or 100 mol% with respect to 100 mol% of the (meth)acrylic binder. Within the above range, it may be easier to realize the above-described effects of the separator.

The first structural unit, which is derived from (meth)acrylic acid, (meth)acrylate, or a salt thereof, may fix the filler on the porous substrate, provide adhesive strength to allow the coating layer to be attached to the porous substrate and the electrodes, and contribute to improvement in the heat resistance and air permeability of the separator. In addition, the first structural unit may have a carboxyl functional group (-C(=O)O-) in the structural unit, thereby improving the dispersibility of the composition for a coating layer.

The first structural unit may be represented by any one of Chemical Formulas 1 to 3 below:

Chemical Formula 1:

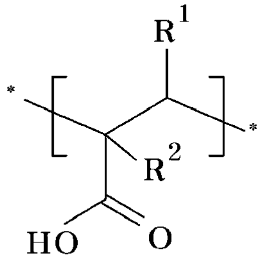

Chemical Formula 2:

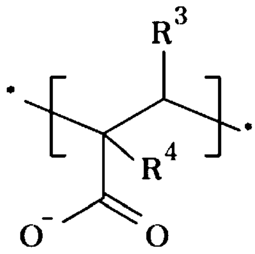

Chemical Formula 3:

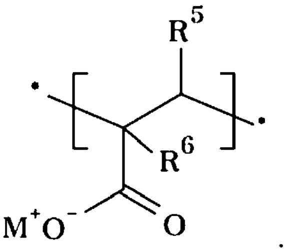

The first structural unit may be included at a range of 20 mol% to 75 mol%, for example, 20,21,22,23,24,25,26,27,28,29,30,31,32,33,34,35,36,37,38,39,40,41,42,43,44,45,46,47,48, 49,50,51,52,53,54,55,56,57,58,59,60,61,62,63,64,65,66,67,68,69,70,71,72,73,74,75 mol%, 25 mol% to 70 mol%, 30 mol% to 65 mol%, 30 mol% to 60 mol%, or 40 mol% to 65 mol% with respect to 100 mol% of the binder for a lithium rechargeable battery. When the first structural unit is included within the above range, the separator may exhibit low membrane resistance, desired or improved adhesive strength and heat resistance to the porous substrate and the electrodes, air permeability, and oxidation resistance.

According to one example embodiment, the first structural unit may include a structural unit represented by Chemical Formula 2 and a structural unit represented by Chemical Formula 3. In this case, the structural unit represented by Chemical Formula 2 and the structural unit represented by Chemical Formula 3 may be included in a molar ratio in a range of 10:1 to 1:2, 10:1 to 1:1, or 5:1 to 1:1.

According to another example embodiment, the first structural unit may include only the structural unit represented by Chemical Formula 2 or Chemical Formula 3.

The second structural unit is derived from a hydroxyalkyl (meth)acrylate, and thus may fix a filler on a porous substrate and also provide adhesive strength such that a coating layer is attached to the porous substrate and electrodes. In addition, the second structural unit has a carboxyl group (-C(=O)O-) in the structural unit, and thus may improve the dispersibility of a composition for a coating layer.

The second structural unit may be represented by Chemical Formula 4 below:

Chemical Formula 4:

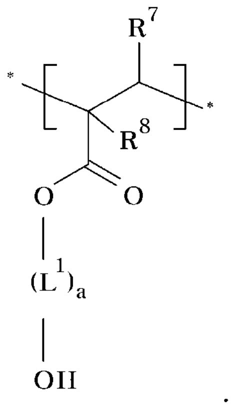

The second structural unit may be included at a range of 1 mol% to 20 mol%, for example, 1,2,3,4,5,6,7,8,9,10,11,12,13,14,15,16,17,18,19,20 mol%, 2 mol% to 15 mol%, 5 mol% to 15 mol%, or 5 mol% to 10 mol% with respect to 100 mol% of the binder for a lithium rechargeable battery. Within the above range, the second structural unit may readily increase the adhesive strength of the coating layer to the porous substrate and electrodes.

The second structural unit may be or include, for example, a structural unit derived from a hydroxyalkyl (meth) acrylate. Here, the alkyl may be or include at least one of C1 to C20 alkyl, C1 to C10 alkyl, or C1 to C6 alkyl.

The hydroxyalkyl (meth)acrylate may include, for example, one or more of hydroxymethyl (meth)acrylate, 2-hydroxyethyl (meth)acrylate, 2-hydroxypropyl (meth)acrylate, 2-hydroxybutyl (meth)acrylate, 4-hydroxybutyl (meth) acrylate, and 6-hydroxyhexyl (meth)acrylate.

The third structural unit derived from (meth)acrylamidosulfonic acid or a salt thereof may increase the possibility of the migration of lithium ions in the presence of the first structural unit and the second structural unit, thereby reducing the membrane resistance of a separator.

The third structural unit may include a functional group derived from (meth)acrylamidosulfonic acid or a salt thereof, thereby enhancing the heat resistance of the separator due to a glass transition temperature-increasing effect. When the third structural unit includes a functional group derived from a salt of (meth)acrylamidosulfonic acid, metals (Ms) may migrate through the third structural unit by a metal (M)-substituted sulfonic acid functional group, and thus membrane resistance can be reduced.

The third structural unit may be represented by at least one of Chemical Formula 5 below, Chemical Formula 6 below, Chemical Formula 7 below, or a combination thereof.

Chemical Formula 5:

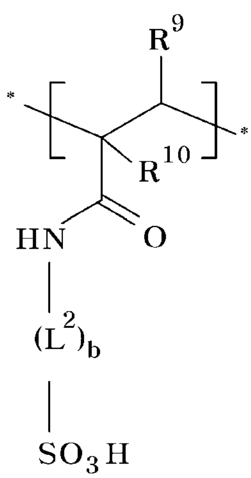

Chemical Formula 6:

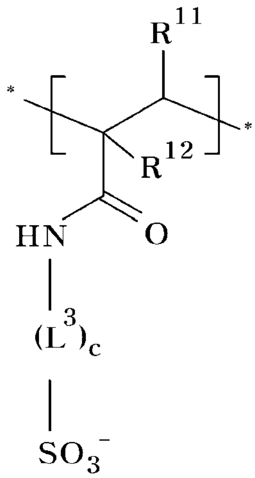

Chemical Formula 7:

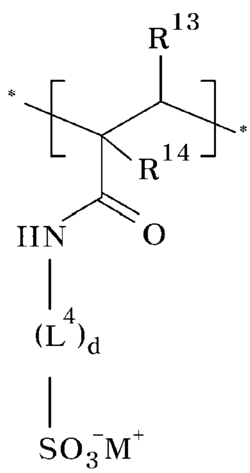

The third structural unit may include any one, or two or more, of the structural unit represented by Chemical Formula 5, the structural unit represented by Chemical Formula 6, and the structural unit represented by Chemical Formula 7. In one example, the third structural unit may include the structural unit represented by Chemical Formula 6, and in another example, the third structural unit may include the structural unit represented by Chemical Formula 6 and the structural unit represented by Chemical Formula 7.

The third structural unit may be or include, for example, a structural unit derived from a (meth)acrylamidoalkane sulfonic acid or a salt thereof. Here, the alkane may be or include a C1 to C20 alkane, C1 to C10 alkane, or C1 to C6 alkane, and the alkyl may be or include a C1 to C20 alkyl, C1 to C10 alkyl, or C1 to C6 alkyl. The salt may be or include a salt consisting of the above-described sulfonic acid and appropriate ions. The ions may be or include, for example, alkali metal ions, and in this case, the salt may be or include a sulfonic acid alkali metal salt.

For example, the (meth)acrylamidoalkane sulfonic acid may be 2-(meth)acrylamido-2-methylpropane sulfonic acid.

The third structural unit may be included at a range of 20 mol% to 75 mol%, for example, 20,21,22,23,24,25,26,27,28,29,30,31,32,33,34,35,36,37,38,39,40,41,42,43,44,45,46,47,48, 49,50,51,52,53,54,55,56,57,58,59,60,61,62,63,64,65,66,67,68,69,70,71,72,73,74,75 mol%, 25 mol% to 70 mol%, 20 mol% to 65 mol%, 30 mol% to 65 mol%, or 30 mol% to 60 mol% of the (meth)acrylic binder. When the third structural unit is included within the above range, the (meth)acrylic binder and a separator including the same may exhibit a significantly low membrane resistance.

Chemical Formulas 1 to 7 are described below.

$R^1$ to $R^{14}$ may each independently be or include hydrogen or a C1 to C10 alkyl group. For example, $R^1$ to $R^7$ and $R^9$ to $R^{14}$ may each independently be or include hydrogen or a methyl group, and $R^8$ may be or include a methyl group.

$L^1$ to $L^4$ may each independently be or include a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^1$ may be or include a methylene group or an ethylene group; and $L^2$ to $L^4$ may each independently be or include $*\text{-}C(CH_3)_2\text{-}CH_2\text{-}*$.

a, b, c, and d may each be independently an integer in a range from 0 to 2. For example, a, b, c, and d may all be equal to 1.

M may be or include an alkali metal, and the alkali metal may be or include at least one of lithium, sodium, potassium, rubidium, or cesium. For example, M may be or include lithium or sodium.

A representative example of the (meth)acrylic binder according to one example embodiment is Chemical Formula 8 below:

Chemical Formula 8:

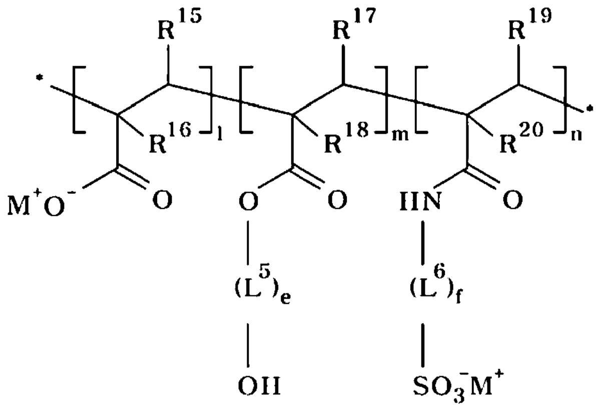

.

Chemical Formula 8 are described below.

$R^{15}$ to $R^{20}$ may each independently be or include hydrogen or a C1 to C10 alkyl group. For example, $R^{15}$ to $R^{17}$, $R^{19}$, and $R^{20}$ may each independently be or include hydrogen or a methyl group, and $R^{18}$ may be or include a methyl group.

$L^5$ and $L^6$ may each independently be or include a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group. For example, $L^5$ may be or include a methylene group or an ethylene group, and $L^6$ may be or include $*-C(CH_3)_2-CH_2-*$.

M may be or include an alkali metal, and the alkali metal may be or include lithium, sodium, potassium, rubidium, or cesium. For example, M may be or include lithium or sodium.

1, m, and n are the molar ratios of the units, and satisfy $l+m+n=1$. For example, the molar ratios may satisfy $0.20 \leq l \leq 0.75$, $0.01 \leq m \leq 0.2$, and $0.2 \leq n \leq 0.75$, for example, $0.25 \leq l \leq 0.70$, $0.01 \leq m \leq 0.15$, and $0.25 \leq n \leq 0.75$; or $0.3 \leq l \leq 0.65$, $0.05 \leq m \leq 0.15$, and $0.3 \leq n \leq 0.65$.

e and f may each be independently an integer in a range from 0 to 2. For example, e and f may all be equal to 1.

The (meth)acrylic binder may include an alkali metal. The alkali metal may be present in the form of a cation, and may be or include, for example, at least one of lithium, sodium, potassium, rubidium, or cesium. For example, the alkali metal may be bonded with the (meth)acrylic binder and may be present in the form of a salt. The alkali metal may assist with the synthesis of the (meth)acrylic binder in an aqueous solvent, increase the adhesive strength of the coating layer, and improve the heat resistance, air permeability, and oxidation resistance of the separator.

The alkali metal may be included at a range of 1 wt% to 40 wt%, for example, 1 wt% to 30 wt%, 1 wt% to 20 wt%, or 10 wt% to 20 wt%, of the alkali metal and the (meth)acrylic binder. For example, the (meth)acrylic binder and the alkali metal may be included at a weight ratio in a range of 99:1 to 60:40, 99:1 to 70:30, 99:1 to 80:20, or 90:10 to 80:20.

The alkali metal may be included at a range of 0.1 mol% to 1.0 mol% with respect to the total content of the alkali metal and the (meth)acrylic binder. When the alkali metal is included within the above range, the coating layer may have desired or improved adhesive strength, and the separator including the same may exhibit desired or improved heat resistance, air permeability and oxidation resistance.

The (meth)acrylic heat-resistant binder may have various forms, such as an alternating polymer in which the structural units are distributed alternately, a random polymer in which the structural units are distributed randomly, or a graft polymer in which some of the structural units are grafted.

The weight average molecular weight of the (meth)acrylic binder may be in a range of 100,000 g/mol to 1,000,000 g/mol, 100,000 g/mol to 500,000 g/mol, 100,000 g/mol to 150,000 g/mol, 200,000 g/mol to 130,000 g/mol, or 300,000 g/mol to 900,000 g/mol. When the weight average molecular weight of the(meth)acrylic binder satisfies the above range, desired or improved adhesive strength and low resistance may be exhibited. The weight average molecular weight may be or include a polystyrene-converted average molecular weight, which is measured using gel permeation chromatography.

The (meth)acrylic binder may be prepared by a solution polymerization method.

According to one example embodiment, the (meth)acrylic binder may be included as a film in the coating layer of the separator.

The crosslinking agent includes an aziridine-based crosslinking agent.

The aziridine-based crosslinking agent may crosslink the (meth)acrylic binder to help the separator reach the range of the heat shrinkage rate in an electrolyte. In addition, the aziridine-based crosslinking agent may crosslink the (meth)acrylic binder to significantly lower the membrane resistance of the separator. In addition, the aziridine-based crosslinking agent may crosslink the (meth)acrylic binder to increase adhesive strength to electrodes.

The aziridine-based crosslinking agent may be or include a difunctional or more aziridine-based crosslinking

agent. Here, "difunctional or more" means the presence of two or more aziridines in the molecule. According to one example embodiment, the aziridine-based crosslinking agent may be or include a difunctional or trifunctional aziridine-based crosslinking agent.

For example, the aziridine-based crosslinking agent may include one or more of N,N'-toluene-2,4-bis(1-aziridinecarboxamide), N,N'-(methylenedi-p-phenylene)bis(aziridine-1-carboxamide), triethylenemelamine, 1,1-isophthaloyl bis(2-methylaziridine), tris(1-aziridinyl)phosphine oxide, N,N-hexamethylene-bis(aziridine carboxamide), trimethylolpropane tris(2-methyl-1-aziridinepropionate), trimethylolpropane tris(beta-N-aziridinyl)propionate, and pentaerythritol tris(3-(1-aziridinyl)propionate).

The crosslinking agent, for example, the aziridine-based crosslinking agent, may be included at an appropriate content based on the binder, for example, the (meth)acrylic binder. According to one example embodiment, the aziridine-based crosslinking agent may be included at a range of 5 parts by weight to 50 parts by weight, for example, 5,6,7,8,9,10,11,12,13,14,15,16,17,18,19,20,21,22,23,24,25,26,27,28,29,30,31,32,33,34,35, 36,37,38,39,40,41,42,43,44,45,46,47,48,49,50 parts by weight, 5 parts by weight to 30 parts by weight, 5 parts by weight to 25 parts by weight, or 5 parts by weight to 20 parts by weight with respect to 100 parts by weight of the (meth)acrylic binder. Within the above range, the heat shrinkage rate in an electrolyte and membrane resistance of the separator may be decreased significantly.

The filler includes a filler having a particle size (D50) in a range of 150 nm to 200 nm.

According to one example embodiment, the filler may not be surface-modified, or may be surface-modified.

The filler having an amine group may be or include, for example, an inorganic filler, an organic filler, an organic/inorganic-composite filler or a combination thereof. The inorganic filler may be or include a ceramic material that can improve heat resistance. The inorganic filler may include, for example, at least one of a metal oxide, a metalloid oxide, a metal fluoride, a metal hydroxide, or a combination thereof. The inorganic filler may include, for example, at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but the present disclosure is not limited thereto. The organic filler may include at least one of an acryl compound, an imide compound, an amide compound, or a combination thereof, but the present disclosure is not limited thereto. The organic filler may have a core-shell structure, but the present disclosure is not limited thereto. For example, the filler may be or include boehmite.

The filler may be spherical, plate-like, cubic, or amorphous. For example, the filler may be cubic, and the cubic filler may significantly reduce the above-described heat shrinkage rate.

The filler may be included at an appropriate content with respect to the binder, for example, the (meth)acrylic binder.

According to one example embodiment, the (meth)acrylic binder and the filler may be included in a mass ratio in a range of 1:10 to 1:50, for example, 1:10, 1:15, 1:20, 1:25, 1:30, 1:35, 1:40, 1:45, 1:50, 1:10 to 1:40, or 1:20 to 1:30. Within the above range, an effect of improving heat shrinkage in an electrolyte may be exhibited.

The filler may be included at a range of 50 wt% to 99 wt%, 70 wt% to 99 wt%, 75 wt% to 99 wt%, 80 wt% to 99 wt%, 85 wt% to 99 wt%, 90 wt% to 99 wt%, or 95 wt% to 99 wt% of the total weight of the coating layer. When the filler is included within the above range, desired or improved heat resistance, durability, oxidation resistance and stability may be exhibited.

The coating layer may have a thickness in a range of 0.01 $\mu$m to 20 $\mu$m, and within the above range, the coating layer may have a thickness of 0.01 $\mu$m to 7 $\mu$m, 0.1 $\mu$m to 5 $\mu$m, or 0.1 $\mu$m to 3 $\mu$m. For example, the thickness of the coating layer may be in a range of 0.1 $\mu$m to 2 $\mu$m.

The ratio of the thickness of the coating layer to the thickness of the porous substrate may be in a range of 0.01 to 0.7, for example, 0.01 to 0.5, 0.01 to 0.4, or 0.01 to 0.3. Within the above range, the separator may exhibit desired or improved air permeability, heat resistance and adhesive strength. Here, the "thickness of the coating layer" means the thickness of one coating layer when it is formed on only one surface of the porous substrate, and the total thickness of two coating layers when they are formed on both surfaces of the porous substrate.

**Porous substrate:**

A porous substrate has a large number of pores and may be or include a substrate commonly used in electrochemical devices. The porous substrate may be or include, but is not limited to, a polymer film which is formed of or include any one polymer such as at least one of polyolefins such as polyethylene and polypropylene, polyesters such as polyethyleneterephthalate and polybutyleneterephthalate, polyacetal, polyamide, polyimide, polycarbonate, polyetheretherketone, polyaryletherketone, polyetherimide, polyamideimide, polybenzimidazole, polyethersulfone, polyphenyleneoxide, cyclic olefin copolymer, polyphenylenesulfide, polyethylenenaphthalate, glass fiber, Teflon, and polytetrafluoroethylene, or a copolymer or mixture of two or more thereof.

The porous substrate may be or include, for example, a polyolefin-based substrate including a polyolefin, and the polyolefin-based substrate may have a desired or improved shut-down function, thereby contributing to improving the safety of the battery. The polyolefin-based substrate may be or include at least one of, for example, a polyethylene single

layer film, a polypropylene single-layer film, a polyethylene/polypropylene two-layer film, a polypropylene/polyethylene/polypropylene three-layer film, and a polyethylene/polypropylene/polyethylene three-layer film. In addition, the polyolefin-based resin may include a non-olefin resin in addition to an olefin resin, or may include a copolymer of olefin and non-olefin monomers.

The porous substrate may have a thickness in a range of 1 to 40 μm, for example, 1 μm to 30 μm, 1 μm to 20 μm, or 5 μm to 15 μm.

The porous substrate may have an air permeability of less than 200 sec/100 cc, for example, 190 sec/100 cc or less, or 180 sec/100 cc or less. Within the above range, the porous substrate may be used in a separator.

A separator for a rechargeable battery according to one example embodiment may be formed by applying a composition for forming a coating layer on one surface, or on both surfaces, of a porous substrate, and drying the composition. The drying may be performed by a conventional method known in the art.

FIG. 1 is a cross-sectional view illustrating a separator for a rechargeable lithium battery according to one example embodiment.

Referring to FIG. 1, the separator for a rechargeable lithium battery includes a porous substrate 1, and a coating layer 2 located on one surface of the porous substrate 1. The coating layer 2 may include a filler 3; and a crosslinked product 4 of a (meth)acrylic binder and an aziridine-based crosslinking agent.

<u>Second separator for a rechargeable lithium</u>

A separator for a rechargeable lithium battery according to an example embodiment includes a porous substrate and a coating layer located on at least one surface of the porous substrate. The coating layer includes a crosslinked product of a binder and a crosslinking agent, a filler, and an adhesive binder. The binder includes a (meth)acrylic binder including a first structural unit derived from (meth)acrylamide and a second structural unit derived from (meth)acrylamido sulfonic acid or a salt thereof. The crosslinking agent includes an aziridine-based crosslinking agent, and the adhesive binder includes a crosslinked (meth)acrylic adhesive binder.

According to an example embodiment, the coating layer may be or include a heat-resistant adhesive layer.

According to an example embodiment, the crosslinked product may be or include a thermally crosslinked product.

According to an example embodiment, the coating layer may be formed of or include a composition for a coating layer including at least one of the (meth)acrylic binder, the aziridine-based crosslinking agent, the filler, and the crosslinked (meth)acrylic adhesive binder.

The separator exhibits desired or improved air permeability, a low heat shrinkage rate in an electrolyte, low membrane resistance, desired or improved bending strength, and desired or improved wet adhesion.

The separator may have an air permeability of 150 sec/100 cc or less.

The separator may have a heat shrinkage rate in an electrolyte of 8% or less in each of the machine direction (MD) and the transverse direction (TD). The above-described "MD" and "TD" are the same directions as the MD and TD of the porous substrate, respectively.

The separator may have a membrane resistance of 0.8 Ω or less.

The separator may have a wet adhesion of 0.65 gf/mm or more.

In the case of a separator having a coating layer formed of or including a composition for a coating layer including the (meth)acrylic binder and not including the aziridine-based crosslinking agent, or including a crosslinking agent other than the aziridine-based crosslinking agent as a crosslinking agent, a heat shrinkage rate in an electrolyte may be significantly increased.

According to an example embodiment, the aziridine-based crosslinking agent may be included in an amount of 95 wt% or more, for example, 98 wt% to 100 wt%, or 100 wt% of the total crosslinking agent in the composition for a coating layer.

In the case of a separator having a coating layer formed of or including a composition for a coating layer including the aziridine-based crosslinking agent and not including the (meth)acrylic binder, or including a binder other than the (meth)acrylic binder, resistance may be increased.

According to an example embodiment, the (meth)acrylic binder may be included in an amount of 95 wt% or more, for example, 98 wt% to 100 wt%, or 100 wt% of the total binder (e.g., the non-adhesive binder) in the composition.

In the case of a separator having a coating layer formed of or including a composition for a coating layer including an adhesive binder other than the crosslinked (meth)acrylic adhesive binder, bending strength may not be secured.

According to an example embodiment, the crosslinked (meth)acrylic adhesive binder may be included in an amount of 95 wt% or more, for example, 98 wt% to 100 wt%, or 100 wt% of the total adhesive binder in the composition.

**Coating layer:**

The binder includes a (meth)acrylic binder including a first structural unit derived from (meth)acrylic acid, (meth) acrylate, or a salt thereof, a second structural unit derived from hydroxyalkyl (meth)acrylate, and a third structural unit derived from (meth)acrylamido sulfonic acid or a salt thereof.

The above (meth)acrylic binder satisfies all of the contents described in the first separator for the rechargeable battery. Accordingly, the contents of the (meth)acrylic binder described in the first separator for the rechargeable battery can be equally applied to the second separator for the rechargeable battery. Accordingly, a detailed description of the (meth)acrylic binder is omitted.

The crosslinking agent includes an aziridine-based crosslinking agent.

The aziridine-based crosslinking agent may crosslink the (meth)acrylic binder and simultaneously or contemporaneously allow the separator to readily reach a shrinkage rate range in an electrolyte.

The aziridine-based crosslinking agent may be or include a bifunctional or higher aziridine-based crosslinking agent. Here, "bifunctional or higher" means that two or more aziridine groups are present in the molecule. According to an example embodiment, the aziridine-based crosslinking agent may be or include a bifunctional or trifunctional aziridine-based crosslinking agent.

For example, the aziridine-based crosslinking agent may include one or more of N,N'-toluene-2,4-bis(1-aziridinecarboxamide), N,N'-(methylenedi-p-phenylene)bis(aziridine-1-carboxamide), triethylenemelamine, 1,1-isophthaloyl bis(2-methylaziridine), tris(1-aziridinyl)phosphine oxide, N,N-hexamethylene-bis(aziridinecarboxamide), trimethylolpropane tris(2-methyl-1-aziridinepropionate), trimethylolpropane tris(β-N-aziridinyl)propionate, and pentaerythritol tris(3-(1-aziridinyl)propionate).

The crosslinking agent, for example, the aziridine-based crosslinking agent, may be included in an appropriate amount with respect to the binder, for example, the (meth)acrylic binder.

According to an example embodiment, the crosslinking agent may be included in an amount in a range of 5 parts by weight to 50 parts by weight, for example, 5,6,7,8,9,10,11,12,13,14,15,16,17,18,19,20,21,22,23,24,25,26,27,28,29,30,31,32,33,34,35, 36,37,38,39,40,41,42,43,44,45,46,47,48,49,50 parts by weight, 10 parts by weight to 50 parts by weight, 20 parts by weight to 50 parts by weight, or 10 parts by weight to 20 parts by weight with respect to 100 parts by weight of the (meth) acrylic binder. Within the above range, heat resistance can be improved.

The filler may have a particle size D50 of 0.4 μm or less. Within the above range, when the filler is combined with the (meth)acrylic binder and the crosslinking agent, a shrinkage rate in an electrolyte can be readily reached. For example, the filler may have a particle size D50 of 0.35 μm or less, 0.3 μm or less, or a range of 0.1 μm to 0.3 μm. Within the above range, an effect of improving heat resistance can be exhibited.

According to an example embodiment, the filler having a particle size D50 of 0.4 μm or less may be included in an amount of 95 wt% or more, for example, 95 wt% to 100 wt%, 98 wt% to 100 wt%, or 100 wt% of the total filler in the coating layer. Within the above range, the effect of the separator of the present disclosure can be readily implemented.

According to an example embodiment, the filler may not be surface-modified, or may be surface-modified.

The filler may be or include, for example, an inorganic filler, an organic filler, an organic/inorganic composite filler, or a combination thereof. The inorganic filler may be or include a ceramic material that is capable of improving heat resistance. The inorganic filler may be or include, for example, at least one of a metal oxide, a metalloid oxide, a metal fluoride, a metal hydroxide, or a combination thereof. The inorganic filler may include, for example, at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, or a combination thereof, but is not limited thereto. The organic filler may include at least one of an acryl compound, an imide compound, an amide compound, or a combination thereof, but is not limited thereto. The organic filler may have a core-shell structure, but is not limited thereto. For example, the filler may include boehmite.

The filler may be spherical, platy, cubic, or amorphous. For example, the filler may be cubic, and in the case of a cubic filler, the above-described shrinkage rate may be significantly lowered.

The filler may be included in an appropriate amount with respect to the binder, for example, the (meth)acrylic binder. According to an example embodiment, the (meth)acrylic binder and the filler may be included in a mass ratio in a range of 1:0.1 to 1:1, for example, 1:0.1, 1:0.2, 1:0.3, 1:0.4, 1:0.5, 1:0.6, 1:0.7, 1:0.8, 1:0.9, 1:1, 1:0.2 to 1:0.8 or 1:0.5 to 1:0.8. Within the above range, an effect of improving heat resistance in an electrolyte can be exhibited.

The filler may be included in an amount in a range of 50 wt% to 99 wt%, for example, 70 wt% to 99 wt%, 75 wt% to 99 wt%, 80 wt% to 99 wt%, 85 wt% to 99 wt%, 90 wt% to 99 wt%, or 95 wt% to 99 wt% of the total weight of the coating layer. When the filler is included within the above range, desired or improved heat resistance, durability, oxidation resistance, and stability can be exhibited.

The adhesive binder includes a crosslinked (meth)acrylic adhesive binder.

The adhesive binder secures the adhesion of the separator to an electrode. Since heat resistance and adhesion are physical properties having a trade-off relationship, the adhesive binder is further included in addition to the (meth)acrylic binder so that the (meth)acrylic binder and the adhesive binder are each independently present in the coating layer, thereby implementing a separator which heat resistance and adhesion are both desired or improved.

Due to the adhesive binder, the separator can maintain heat resistance and adhesion, enhance battery stability and lifespan when subsequently used in a battery, and also improve battery resistance.

The adhesive binder may be or include a crosslinked binder. According to an example embodiment, the adhesive binder is a (meth)acrylic adhesive binder and may be or include a crosslinked (meth)acrylate-based polymer or copolymer. For example, the adhesive binder may include a crosslinked polymethyl (meth)acrylate-based polymer.

According to an example embodiment, the adhesive binder may be or include an aqueous adhesive binder.

To prepare the crosslinked (meth)acrylic polymer, a crosslinking agent may be further added in a polymerization step.

The (meth)acrylic adhesive binder may have a glass transition temperature in a range of 50 °C to 110 °C, for example, 50 °C to 70 °C, if (when) present. Within the above range, not only desired or improved electrode adhesion, but also good ionic conductivity can be achieved. The glass transition temperature may be measured using, e.g., differential scanning calorimetry (DSC). For example, the glass transition temperature is obtained under a temperature range of 25 °C to 200 °C, a temperature increase rate of 10 °C/min, and a controlled atmosphere after 2 mg of a polymer is input into a pressure-resistant pan for DSC measurement.

According to an example embodiment, the adhesive binder is a crosslinked adhesive binder and may be or include a mixture of two types of (meth)acrylic adhesive binders having different swelling ratios. For example, the adhesive binder may be or include a mixture of a first (meth)acrylic adhesive binder having a swelling ratio in a range of 100% to 200% and a second (meth)acrylic adhesive binder having a swelling ratio in a range of 1000% to 1500%. The first (meth) acrylic adhesive binder may increase the wet adhesion of the separator, and the second (meth)acrylic adhesive binder may increase dry adhesion.

Here, a "swelling ratio" may be measured by the following method.

A predetermined or desired amount of adhesive binder is placed in a Petri dish (laboratory dish), dried on a level stand, and cut to a size of 1 cm×1 cm to prepare a sample. The weight (1) of the prepared sample is measured, and the sample is input into a glass bottle. In a dry room or a glove box, an electrolyte is added in an amount that allows the sample in the glass bottle to be sufficiently saturated, and the sample is allowed to stand in a 70 °C oven for 72 hours and then taken out of the glass bottle. The electrolyte remaining on the outside of the sample is wiped off with paper towel, and the weight (2) of the resulting sample is measured. A swelling ratio in the electrolyte is measured by the equation below. Here, the electrolyte is an electrolyte in which 1.3M $LiPF_6$, which is a support electrolyte, is dissolved in a mixed solvent of ethylene carbonate (EC)/ethyl methyl carbonate (EMC)/diethyl carbonate (DEC) in a volume ratio of 3:5:2.

$$\text{Swelling ratio} = \{(2) - (1)\} / (1) \times 100.$$

The swelling ratio of the (meth)acrylic binder may be adjusted by appropriately selecting the type and content of monomers for preparing the binder of the present disclosure in consideration of the solubility parameter (SP) value of an electrolyte.

The adhesive binder may be included in an amount in a range of 1 wt% to 20 wt%, for example, 5 wt% to 20 wt%, for example, 5 wt% to 15 wt% with respect to the total weight of the coating layer. Within the above range, adhesion to an electrode can be exhibited, and battery resistance cannot be increased, thereby resulting in no limitation on capacity implementation.

The adhesive binder may be included in an amount in a range of 10 parts by weight to 200 parts by weight, for example, 10, 15, 20, 25, 30, 35, 40, 45, 50, 55, 60, 65, 70, 75, 80, 85, 90, 95, 100, 105, 110, 115, 120, 125, 130, 135, 140, 145, 150, 155, 160, 165, 170, 175, 180, 185, 190, 195, 200 parts by weight, 10 parts by weight to 100 parts by weight with respect to 100 parts by weight of the (meth)acrylic binder.

The coating layer may have a thickness in a range of 0.01 μm to 20 μm. Within the above range, the thickness may be 0.01 μm to 7 μm, 0.1 μm to 5 μm, or 1 μm to 3 μm.

A ratio of the thickness of the coating layer to the thickness of the porous substrate may be in a range of 0.01 to 0.7, for example, 0.01 to 0.5, 0.01 to 0.4, or 0.01 to 0.3. Within the above range, the separator can exhibit desired or improved air permeability, heat resistance, and adhesion. Here, the "thickness of the coating layer" refers to the thickness of one coating layer when the coating layer is formed on only one surface of the porous substrate, and refers to the total thickness of two coating layers when the coating layer is formed on both surfaces of the porous substrate.

**Porous substrate**

The porous substrate may be or include a substrate that has a number of pores and is used in typical electrochemical devices.

The above porous substrate satisfies all of the contents described in the first separator for the rechargeable battery. Accordingly, the contents of the porous substrate described in the first separator for the rechargeable battery can be equally applied to the second separator for the rechargeable battery. Accordingly, a detailed description of the porous substrate is omitted.

The separator for a rechargeable battery according to an example embodiment may be formed by applying a composition for forming a coating layer onto one surface, or both surfaces, of the porous substrate, and drying the composition. The drying may be performed using a typical method known in the art.

FIG. 2 is a cross-sectional view showing a separator for a rechargeable lithium battery according to an another example embodiment.

Referring to FIG. 2, the separator for a rechargeable lithium battery includes a porous substrate 1 and coating layers 2 located on both surfaces of the porous substrate 1. The coating layer 2 may include a filler 3, a crosslinked product 4 of a (meth)acrylic binder and an aziridine-based crosslinking agent, and an adhesive binder 5.

Rechargeable lithium battery

According to one example embodiment, the rechargeable lithium battery includes the separator for a rechargeable lithium battery, a positive electrode, and a negative electrode. The separator for rechargeable lithium battery refers to the description described above. The separator for rechargeable lithium battery may be positioned between the positive electrode and the negative electrode.

Positive electrode

A positive electrode for a rechargeable lithium battery may include a current collector and a positive electrode active material layer on the current collector. The positive electrode active material layer may include a positive electrode active material, and may further include a binder and/or a conductive material.

For example, the positive electrode may further include an additive that can constitute a sacrificial positive electrode.

Positive electrode active material

The positive electrode active material may include a compound (lithiated intercalation compound) that is capable of intercalating and deintercalating lithium. For example, at least one of a composite oxide of lithium and a metal such as or including at least one of cobalt, manganese, nickel, and combinations thereof may be used.

The composite oxide may be or include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

As an example, the following compounds represented by any one of the following Chemical Formulas may be used. $Li_aA_{1-b}X_bO_{2-c}D_c$ ($0.90 \le a \le 1.8$, $0 \le b \le 0.5$, and $0 \le c \le 0.05$); $Li_aMn_{2-b}X_bO_{4-c}D_c$ ($0.90 \le a \le 1.8$, $0 \le b \le 0.5$, and $0 \le c \le 0.05$); $Li_aNi_{1-b-c}Co_bX_cO_{2-\alpha}D_\alpha$ ($0.90 \le a \le 1.8$, $0 \le b \le 0.5$, $0 \le c \le 0.5$, and $0 < \alpha < 2$); $Li_aNi_{1-b-c}Mn_bX_cO_{2-\alpha}D_\alpha$ ($0.90 \le a \le 1.8$, $0 \le b \le 0.5$, $0 \le c \le 0.5$, and $0 < \alpha < 2$); $Li_aNi_bCo_cL^1_dG_eO_2$ ($0.90 \le a \le 1.8$, $0 \le b \le 0.9$, $0 \le c \le 0.5$, $0 \le d \le 0.5$, and $0 \le e \le 0.1$); $Li_aNiG_bO_2$ ($0.90 \le a \le 1.8$ and $0.001 \le b \le 0.1$); $Li_aCoG_bO_2$ ($0.90 \le a \le 1.8$ and $0.001 \le b \le 0.1$); $Li_aMn_{1-b}G_bO_2$ ($0.90 \le a \le 1.8$ and $0.001 \le b \le 0.1$); $Li_aMn_2G_bO_4$ ($0.90 \le a \le 1.8$ and $0.001 \le b \le 0.1$); $Li_aMn_{1-g}G_gPO_4$ ($0.90 \le a \le 1.8$ and $0 \le g \le 0.5$); $Li_{(3-f)}Fe_2(PO_4)_3$ ($0 \le f \le 2$); or $Li_aFePO_4$ ($0.90 \le a \le 1.8$).

In the above Chemical Formulas, A is or includes at least one of Ni, Co, Mn, or a combination thereof; X is or includes at least one of Al, Ni, Co, Mn, Cr, Fe, Mg, Sr, V, a rare earth element or a combination thereof; D is or includes at least one of O, F, S, P, or a combination thereof; G is or includes at least one of Al, Cr, Mn, Fe, Mg, La, Ce, Sr, V, or a combination thereof; and $L^1$ is or includes at least one of Mn, Al, or a combination thereof.

The positive electrode active material may be or include, for example, a high nickel-based positive electrode active material having a nickel content greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material may be capable of realizing high capacity, and can be applied to a high-capacity, high-density rechargeable lithium battery.

An amount of the positive electrode active material may be in a range of 90 wt% to 99.5 wt% based on 100 wt% of the positive electrode active material layer. Amounts of the binder and the conductive material may be in a range of 0.5 wt% to 5 wt%, respectively, based on 100 wt% of the positive electrode active material layer.

The binder attaches the positive electrode active material particles to each other, and also attaches the positive electrode active material to the current collector. Examples of the binder may include at least one of polyvinyl alcohol,

carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may impart conductivity (e.g., electrical conductivity) to the electrode. Any material that does not cause chemical change (e.g., does not cause an undesirable chemical change in the rechargeable lithium battery) and that conducts electrons can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, silver, and the like, in a form of a metal powder or a metal fiber; a conductive polymer such as a polyphenylene derivative; or a mixture thereof.

Al may be used as the current collector, but the current collector is not limited thereto.

Negative electrode

The negative electrode for a rechargeable lithium battery may include a current collector, and a negative electrode active material layer on the current collector. The negative electrode active material layer may include a negative electrode active material, and may further include a binder and/or a conductive material (e.g., an electrically conductive material). For example, the negative electrode active material layer may include 90 wt% to 99 wt% of the negative electrode active material, 0.5 wt% to 5 wt% of the binder, and 0 wt% to 5 wt% of the conductive material.

Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiOx$ ($0 < x < 2$), a Si-Q alloy (where Q is or includes at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material. The binder may attach the negative electrode active material particles to each other, and may also attach the negative electrode active material to the current collector. The binder may include a non-aqueous binder, an aqueous binder, a dry binder, or a combination thereof. The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, silver, and the like, in a form of a metal powder or a metal fiber; a conductive polymer such as a polyphenylene derivative; or a mixture thereof.

The negative current collector may include at least one of a copper foil, a nickel foil, a stainless steel foil, a titanium foil, a nickel foam, a copper foam, a polymer substrate coated with a conductive metal, or a combination thereof.

The rechargeable lithium battery may further include an electrolyte solution.

Electrolyte Solution

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like.

The alcohol-based solvent may include ethanol, isopropyl alcohol, and the like. The aprotic solvent may include at least one of nitriles such as R-CN (wherein R is a C2 to C20 linear, branched, or cyclic hydrocarbon group, a double bond, an aromatic ring, or an ether bond, and the like); amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed together, and the cyclic carbonate and the chain carbonate may be mixed in a volume ratio in a range of 1:1 to 1:9.

The lithium salt dissolved in the organic solvent supplies lithium ions in a battery, enables an operation of a rechargeable lithium battery, and improves transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers in a range of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may be classified into cylindrical, prismatic, pouch, or coin-type batteries, and the like depending on the shape thereof.

FIG. 3 to FIG. 6 are schematic views illustrating a rechargeable lithium battery according to an example embodiment. FIG. 3 shows a cylindrical battery, FIG. 4 shows a prismatic battery, and FIG. 5 and FIG. 6 show pouch-type batteries. Referring to FIG. 3 to FIG. 6, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the

case 50, as shown in FIG. 3. In FIG. 4, the rechargeable lithium battery 100 may include a positive lead tab 11, a positive terminal 12 connected to the positive lead tab 11, a negative lead tab 21, and a negative terminal 22 connected to the negative lead tab 21. As shown in FIG. 5 and FIG. 6, the rechargeable lithium battery 100 may include an electrode tab 70 illustrated in FIG. 6, or for example, a positive electrode tab 71 and a negative electrode tab 72 illustrated in FIG. 5, the electrode tabs 70/71/72 forming an electric path for inducing the current formed in the electrode assembly 40 to the outside of the battery 100.

The rechargeable lithium battery according to an example embodiment may be applied to, e.g., automobiles, mobile phones, and/or various types of electric devices, as non-limiting examples.

Hereinafter, examples and comparative examples of the present disclosure are described. However, the following examples are merely provided to illustrate the present disclosure, and the present disclosure is not limited to the following examples.

**Preparation Example 1**

In a 3 L four-neck flask equipped with a stirrer, a thermometer, and a condenser, after adding 1249.72 g of distilled water, a 20% lithium hydroxide aqueous solution (203.69 g), acrylic acid (AA, 0.3 mol), 2-hydroxyethyl methacrylate (HEMA, 0.10 mol), 2-acrylamido-2-methylpropanesulfonic acid (AMPS, 0.6 mol), and ammonium persulfate (0.001 mol), an operation of reducing the inner pressure to 10 mmHg using a diaphragm pump and returning the pressure to normal pressure with nitrogen was repeated three times. The reaction was performed for 12 hours while controlling the temperature of the reaction solution to be stabilized between 65 and 70 °C. After cooling to room temperature, 10 mL of the reaction solution was taken and the content of a non-volatile component (NV) was measured to be 9.8 wt% (theoretical value: 10wt%). In addition, in the lithium salt of poly(acrylic acid-co-2-hydroxyethyl methacrylate-co-2-acrylamido-2-methylpropanesulfonic acid) obtained herein, the molar ratio of a first structural unit derived from a lithium acrylate salt, a second structural unit derived from 2-hydroxyethyl methacrylate, and a third structural unit derived from a lithium salt of 2-acrylamido-2-methylpropane sulfonic acid was 30:10:60.

**Preparation Example 2**

Poly(lithium acrylate-co-2-hydroxyethyl methacrylate-co-lithium salt of 2-acrylamido-2-methylpropanesulfonic acid) was prepared by changing the contents of monomers in Preparation Example 1. The molar ratio of lithium acrylate, 2-hydroxyethyl methacrylate, and a lithium salt of 2-acrylamido-2-methylpropanesulfonic acid was 40:10:50. 10 mL of the reaction solution (reaction product) was taken and the content of a non-volatile component was measured to be 9.0 wt% (theoretical value: 10wt%).

**Preparation Example 3**

Poly(lithium acrylate-co-2-hydroxyethyl methacrylate-co-lithium salt of 2-acrylamido-2-methylpropanesulfonic acid) was prepared by changing the contents of monomers in Preparation Example 1. The molar ratio of lithium acrylate, 2-hydroxyethyl methacrylate, and a lithium salt of 2-acrylamido-2-methylpropanesulfonic acid was 65:5:30. 10 mL of the reaction solution (reaction product) was taken and the content of a non-volatile component was measured to be 9.0 wt% (theoretical value: 10wt%).

**Preparation Example 4**

Poly(lithium acrylate-co-2-hydroxyethyl methacrylate-co-lithium salt of 2-acrylamido-2-methylpropanesulfonic acid) was prepared by changing the contents of monomers in Preparation Example 1. The molar ratio of lithium acrylate, 2-hydroxyethyl methacrylate, and a lithium salt of 2-acrylamido-2-methylpropanesulfonic acid was 40:5:55. 10 mL of the reaction solution (reaction product) was taken and the content of a non-volatile component was measured to be 9.0 wt% (theoretical value: 10wt%).

**Preparation Example 5**

An acrylic copolymer was prepared in the same manner as in Preparation Example 1, except that 2-hydroxyethyl methacrylate and 2-acrylamido-2-methylpropanesulfonic acid were used, and acrylic acid was not used. The molar ratio of 2-hydroxyethyl methacrylate to a lithium salt of 2-acrylamido-2-methylpropanesulfonic acid was 74:26. The content of a non-volatile component in the reaction solution was 9.0 wt% (theoretical value: 10 wt%).

**Preparation Example 6**

An acrylic copolymer was prepared in the same manner as in Preparation Example 1, except that acrylic acid and 2-acrylamido-2-methylpropanesulfonic acid were used, and 2-hydroxyethyl methacrylate was not used. The molar ratio of acrylic acid to the lithium salt of 2-acrylamido-2-methylpropanesulfonic acid was 74:26. The content of a non-volatile component in the reaction solution was 9.0 wt% (theoretical value: 10wt%).

**Preparation Example 7**

An acrylic copolymer was prepared in the same manner as in Preparation Example 1, except that acrylic acid and 2-hydroxyethyl methacrylate were used, and 2-acrylamido-2-methylpropanesulfonic acid was not used. The molar ratio of lithium acrylate to 2-hydroxyethyl methacrylate was 42:58. The content of a non-volatile component in the reaction solution was 9.0 wt% (theoretical value: 10wt%).

**Example 1**

A dispersion was prepared by mixing the methacrylic binder (10 wt% in distilled water) prepared in Preparation Example 1 and boehmite (particle size (D50): 150 nm, KB-01S produced by KC-pharm, cubic) as a filler in a mass ratio of 1:20 based on the solid content, putting the resulting mixture into a water solvent, and milling and dispersing the resulting solution using a bead mill at 25 °C for 30 minutes.

A composition for forming a coating layer was prepared by putting trimethylolpropane tris(2-methyl-1-aziridinepropionate) (a trifunctional aziridine-based crosslinking agent) as an aziridine-based crosslinking agent into the dispersion, and adding water to have the total content of 20 wt%. Here, the aziridine-based crosslinking agent is included at 10 parts by weight with respect to 100 parts by weight of the acrylic binder.

A separator for a rechargeable lithium battery was prepared by forming a coating layer by coating both surfaces of a polyethylene-based film (thickness: 5.5 μm, CZMZ, air permeability: 110 sec/100 cc, puncture strength: 340 kgf) as a porous substrate with the composition for forming a coating layer to a thickness of 1.0 μm (total of 2.0 μm) by a die coating method, and drying and aging the resulting film in an oven at 70 °C for 16 hours.

**Examples 2 to 6**

Separators for a rechargeable lithium battery were prepared in the same manner as in Example 1, except that the type of the methacrylic binder, and/or the type of the filler, used in Example 1, were changed as shown in Table 1 below.

**Comparative Examples 1 to 9**

Separators for a rechargeable lithium battery were prepared in the same manner as in Example 1, except that the type of the methacrylic binder, the type of the filler, the coating load amount of the adhesive binder, and/or the type of the adhesive binder used in Example 1 were changed as shown in Table 2 below.

The epoxy-based crosslinking agent in Comparative Example 5 was ethyleneglycol diglycidylether.

The carbodiimide (CDI)-based crosslinking agent in Comparative Example 6 was CARBODILITE V-50 (Nisshinbo Chemical).

**Dry shrinkage rate (unit: %)**

Samples were prepared by cutting the separators for a rechargeable lithium battery of Examples and Comparative Examples into a size of 8 cm × 8 cm. A square with a size of 5 cm × 5 cm was drawn on the surface of each sample and inserted in-between paper or alumina powder, and then the resulting product was left in an oven at 150 °C for 1 hour. Afterward, the sample was taken to measure the dimensions of the sides of the previously drawn square , and shrinkage rates in the machine direction (MD) and the transverse direction (TD) were calculated. The shrinkage rates were calculated according to Mathematical Formula 1 below.

Mathematical Formula 1:

$$\text{Mathematical Formula} = (L0 - L1)/L0 \times 100.$$

L0 is the initial length of the separator, and L1 is the length of the separator after the separator was left at 150 °C for 1 hour.

**Heat shrinkage rate in electrolyte (unit: %)**

Production of negative electrode:

A negative electrode active material slurry was prepared by mixing 97 wt% of graphite particles having an average particle size of 25 μm as a negative electrode active material, 1.5 wt% of a styrene-butadiene rubber (SBR) binder, and 1.5 wt% of carboxymethylcellulose (CMC), inputting the resulting mixture into distilled water, and stirring the resulting solution for 60 minutes using a mechanical stirrer. A negative electrode was produced by applying the slurry on a 10 μm thick copper current collector using a doctor blade, drying the resulting current collector in a 100 °C hot air dryer for 0.5 hours, drying the resulting current collector again in vacuum at 120 °C for 4 hours, and then roll-pressing the resulting product.

Production of positive electrode:

A positive electrode active material slurry was prepared by mixing 97 wt% of $LiCoO_2$ as a positive electrode active material, 1.5 wt% of carbon black powder as a conductive material, and 1.5 wt% of polyvinylidenefluoride (PVdF), inputting the resulting mixture into a N-methyl-2-pyrrolidone solvent, and stirring the resulting mixture for 30 minutes using a mechanical stirrer. A positive electrode was produced by applying the slurry on a 20 μm thick aluminum current collector using a doctor blade, drying the resulting current collector in a 100 °C hot air dryer for 0.5 hours, drying the resulting current collector again in vacuum at 120 °C for 4 hours, and then roll-pressing the resulting product.

Three sets of positive electrode-sample-negative electrode laminates were produced by placing a sheet of the sample between the positive electrode and the negative electrode, and then put into a pouch. 3 g of an electrolyte (1.5 M $LiPF_6$-dissolved ethylene carbonate, ethylmethyl carbonate, and dimethyl carbonate (a volume ratio of 30:50:20 based on 100 of the total volume)) was injected such that the laminates were completely impregnated with the electrolyte, sealed, and then left at 25 °C for 12 hours. Subsequently, after being left in an oven at 150 °C for 1 hour, the sample was taken and cooled. A shrinkage rate was calculated by measuring the dimensions of the sides of the sample. The shrinkage rate was calculated according to Mathematical Formula 1 above.

**Membrane resistance (units: Ω)**

After sampling with 36 Φ (size: 36 mm), the separators prepared in Examples and Comparative Examples were measured at room temperature (25 °C) using an Electric Impedance Spectroscopy detector (VSP model, Bio-Logic SAS). Here, the frequency was scanned from 10,000 MHz to 1 Hz using an amplitude of 1,000 mV at open circuit potential.

**Ionic conductivity (units: mS/cm)**

Test cells were produced by impregnating each of the separators prepared in Examples and Comparative Examples with a mixed solvent of 1.5 M $LiPF_6$-dissolved ethylene carbonate, ethylmethyl carbonate, and dimethyl carbonate (2/1/7 volume ratio) electrolyte, inserting the separator into an aluminum foil electrode with a lead tab attached, and sealing the resulting product within an aluminum pouch. The test cells were then evaluated by electrochemical impedance spectroscopy (measured frequency: 100 KHz).

Table 1:

| | | Example | | | | | | Comparative Example | | | | | | | | |
|---|---|---|---|---|---|---|---|---|---|---|---|---|---|---|---|---|
| | | 1 | 2 | 3 | 4 | 5 | 6 | 1 | 2 | 3 | 4 | 5 | 6 | 7 | 8 | 9 |
| Binder | AA | 30 | 30 | 40 | 65 | 40 | 30 | 0 | 74 | 42 | 40 | 40 | 40 | 40 | 40 | 30 |
| | HEMA | 10 | 10 | 10 | 5 | 5 | 10 | 74 | 0 | 58 | 10 | 10 | 10 | 10 | 10 | 10 |
| | AMPS | 60 | 60 | 50 | 30 | 55 | 60 | 26 | 26 | 0 | 50 | 50 | 50 | 50 | 50 | 60 |
| Filler | D50 | 150 | 150 | 150 | 150 | 150 | 200 | 150 | 150 | 150 | 150 | 150 | 150 | 100 | 250 | 650 |
| | Weight ratio | 1:20 | 1:30 | 1:20 | 1:20 | 1:20 | 1:20 | 1:20 | 1:20 | 1:20 | 1:20 | 1:20 | 1:20 | 1:20 | 1:20 | 1:20 |
| Crosslinking agent | Type | Aziridine | Aziridine | Aziridine | Aziridine | Aziridine | Aziridine | Aziridine | Aziridine | Aziridine | None | Epoxy | CDI | Aziridine | Aziridine | Aziridine |
| | pbw | 10 | 10 | 10 | 10 | 10 | 10 | 10 | 10 | 10 | 0 | 10 | 10 | 10 | 10 | 10 |
| Dry shrinkage rate | MD | 2 | 2.5 | 2.3 | 3 | 3 | 2.5 | 15 | 15 | 15 | 2 | 2 | 2 | 2 | 4 | 10 |
| | TD | 2 | 2.5 | 2.3 | 3 | 3 | 2.5 | 15 | 15 | 15 | 2 | 2 | 2 | 2 | 4 | 10 |
| Shrinkage rate in electrolyte | MD | 3 | 12 | 9 | 8 | 8 | 12 | 45 | 45 | 45 | 43 | 45 | 45 | 20 | 25 | 52 |
| | TD | 4 | 15 | 7 | 7 | 7 | 15 | 45 | 45 | 45 | 47 | 45 | 45 | 22 | 27 | 58 |
| Membrane resistance | | 0.55 | 0.55 | 0.55 | 0.5 | 0.55 | 0.57 | 0.8 | 0.8 | 0.8 | 0.55 | 0.55 | 0.58 | 0.65 | 0.56 | 0.5 |
| Ionic conductivity | | 0.678 | 0.678 | 0.678 | 0.678 | 0.678 | 0.655 | 0.466 | 0.466 | 0.466 | 0.678 | 0.678 | 0.643 | 0.574 | 0.678 | 0.746 |

As shown in Table 1 above, the separators for a rechargeable lithium battery of the examples have low dry heat shrinkage rates, low heat shrinkage rates in an electrolyte, low membrane resistance, and high ionic conductivity.
However, as also shown in Table 1 above, the separators for a rechargeable lithium battery of the comparative examples do not exhibit better effects than the dry heat shrinkage rate, heat shrinkage rate in an electrolyte, membrane resistance, and ionic conductivity of the separators of the examples.

**Example 7**

The methacrylic binder (10 wt% in distilled water) prepared in Preparation Example 1 and boehmite (particle size D50: 150 nm, cubic shape) as a filler were mixed in a mass ratio of 1:0.67 based on solid content, and the mixture was added to a water solvent, and milled and dispersed at 25 °C for 30 minutes using a bead mill to prepare a dispersion.
To the dispersion, trimethylolpropane tris(2-methyl-1-aziridinepropionate) was added as an aziridine-based crosslinking agent (a trifunctional aziridine-based crosslinking agent), a solution of crosslinked polymethyl methacrylate (crosslinked PMMA; SP189 commercially available from Zeon, glass transition temperature: 50 °C) diluted to 2 wt% based on solid content was added as an adhesive binder, and water was added so that the total solid content became 20 wt%, thereby preparing a composition for a coating layer. In this case, the aziridine-based crosslinking agent was included in an amount of 10 parts by weight with respect to 100 parts by weight of the acrylic binder, and the adhesive binder was included in an amount of 50 parts by weight with respect to 100 parts by weight of the acrylic binder.
The composition for a coating layer was applied onto only one surface of a polyethylene-based film (commercially available from SK, thickness: 8 μm, air permeability: 120 sec/100 cc, puncture strength: 480 kgf) as a porous substrate with a coating loading amount of 2.9 g/$m^2$ to a thickness of 3 μm by a die coating method, and then dried and aged in an oven at 80 °C for 16 hours to form a coating layer, thereby manufacturing a separator for a rechargeable lithium battery.

**Examples 8 to 11**

Separators for a rechargeable lithium battery were manufactured in the same manner as in Example 7, except that, as shown in Table 2 below, the D50 of boehmite (cubic shape) as a filler was changed, the type of acrylic binder was changed, or the thickness of a coating layer was changed.

**Comparative Examples 10 to 17**

Separators for a rechargeable lithium battery were manufactured in the same manner as in Example 7, except that, as shown in Table 2 below, the D50 of boehmite (cubic shape) as a filler was changed, the type of acrylic binder was changed, the thickness of a coating layer was changed, or the type of adhesive binder was changed.
In Comparative Example 15, ethylene glycol diglycidyl ether was used as an epoxy-based crosslinking agent.
In Comparative Example 16, CARBODILITE V-50 (commercially available from Nisshinbo Chemical Inc.) was used as a carbodiimide (CDI)-based crosslinking agent.
In Comparative Example 17, non-crosslinked carboxymethyl cellulose was used as an adhesive binder.

**Air permeability (units: sec/100 cc)**

Air permeability was determined by measuring the time (units: sec) taken for 100 cc of air to pass through the separator using a measuring device (EG01-55-1MR commercially available from ASAHI SEIKO Co. Ltd.).

Air permeability measurement device settings:

Measurement pressure: 0.5 kg/$cm^2$, cylinder pressure: 2.5 kg/$cm^2$, and set time: 10 seconds

**Heat shrinkage rate in electrolyte (units: %)**

Manufacture of negative electrode:

97 wt% of graphite particles having an average particle size of 25 μm, 1.5 wt% of a styrene-butadiene rubber (SBR) binder, and 1.5 wt% of carboxy methyl cellulose (CMC) were mixed, and the mixture was added to distilled water and stirred using a mechanical stirrer for 60 minutes to prepare a negative electrode active material slurry. The slurry was applied onto a 10 μm-thick copper current collector using a doctor blade, dried in a hot air dryer set at 100 °C for 0.5 hours, additionally dried under vacuum at 120 °C for 4 hours, and roll-pressed to manufacture a negative electrode.

Manufacture of positive electrode:

97 wt% of $LiCoO_2$, 1.5 wt% of carbon black powder as a conductive material, and 1.5 wt% of polyvinylidene fluoride (PVdF) were mixed, and the mixture was added to an N-methyl-2-pyrrolidone solvent and stirred using a mechanical stirrer for 30 minutes to prepare a positive electrode active material slurry. The slurry was applied onto a 20 μm-thick aluminum current collector using a doctor blade, dried in a hot air dryer set at 100 °C for 0.5 hours, additionally dried under vacuum at 120 °C for 4 hours, and roll-pressed to manufacture a positive electrode.

One sheet of the sample was interposed between the positive electrode and the negative electrode to prepare three sets of positive electrode-sample-negative electrode laminates, and the three laminate sets were placed in a pouch. 3 g of an electrolyte (1.5M $LiPF_6$ dissolved in a mixed solvent of ethylene carbonate, ethyl methyl carbonate, and dimethyl carbonate in a volume ratio of 30:50:20 based on the total volume of 100) was injected to completely saturate the laminate with the electrolyte, and the pouch was sealed and allowed to stand at 25 °C for 12 hours. Afterward, the pouch was left in an oven at 150 °C for 1 hour, then the sample was taken out and cooled, and the dimensions of the sides of the sample were measured to calculate a shrinkage rate. The shrinkage rate may be calculated by the following Equation 1.

Equation 1:

$$\text{Shrinkage rate} = (L0 - L1) / L0 \times 100.$$

L0 is the initial length of the separator, and L1 is the length of the separator after being left at 150 °C for 1 hour.

**Membrane resistance (units: Ω)**

Membrane resistance was evaluated by electrochemical impedance spectroscopy (EIS) resistance. Each separator manufactured in the examples and comparative examples was impregnated with an electrolyte (1.5M $LiPF_6$ dissolved in a mixed solvent of ethylene carbonate, ethyl methyl carbonate, and dimethyl carbonate in a volume ratio of 2:1:7), fitted onto an aluminum foil electrode with a lead tab, and sealed in an aluminum pack to manufacture a test cell. The resistance (Ω) of the test cell was measured at 20 °C by an alternating current (AC) impedance method (measurement frequency: 100 kHz).

**Positive electrode adhesion (units: gf/mm, wet adhesion)**

The separator was attached to a positive electrode (manufactured in the same manner as described above) and then placed in a pouch, an electrolyte (1.3M $LiPF_6$ dissolved in a mixed solvent of ethylene carbonate (EC)/ethyl methyl carbonate (EMC)/diethyl carbonate (DEC) in a volume ratio of 3:5:2) was injected, and the pouch was allowed to stand for 12 hours, pressed under conditions of a pressure in a range of 10 kgf/cm$^2$ to 20 kgf/cm$^2$ and a temperature in a range of 70 °C to 90 °C for a duration in a range of 5 seconds to 20 seconds, and disassembled. The separator and the positive electrode were taken out of the pouch and spread out 180°, and the force required to detach the positive electrode from the separator was measured using a tensile tester (HT400 commercially available from Tinius Olsen).

**Bending strength (units: N)**

A positive electrode and a negative electrode were manufactured in the same manner as described above, the separator was interposed between the positive electrode and the negative electrode to manufacture an electrode assembly, and the adhesion of the manufactured electrode assembly was evaluated by measuring 3-point bending strength. Adhesive strength was evaluated as the bending strength.

The flat wound electrode assembly is a rectangular parallelepiped having a length (L) of 40.5 mm, a width (W) of 75 mm, and a thickness of 5.1 mm.

Referring to FIG. 7, an electrode assembly including a positive electrode (a), a negative electrode (b), and a separator (c) interposed between the positive electrode and the negative electrode is wound in a flat jelly roll shape and then accommodated in a pouch (d). Subsequently, an organic electrolyte is injected into the pouch, and then the pouch is sealed.

The electrode assembly was horizontally placed on two supports (e) of a 3-point bending analyzer (Instron single column 3344 model) so that the midpoint of the length of the electrode assembly was located exactly in the center between the two supports. Then, while the midpoint of the length of the electrode assembly was pressed vertically from above at 5 mm/min using a jig (f) equipped with a load cell having a maximum load of 1 kN, strength, that is, maximum strength, when the electrode assembly was bent was measured. The measured maximum strength was evaluated as the bending strength of the electrode assembly.

Table 2:

| | | Examples | | | | | Comparative Examples | | | | | | | |
|---|---|---|---|---|---|---|---|---|---|---|---|---|---|---|
| | | 7 | 8 | 9 | 10 | 11 | 10 | 11 | 12 | 13 | 14 | 15 | 16 | 17 |
| Binder | AA | 30 | 30 | 40 | 65 | 40 | 0 | 74 | 42 | 40 | 40 | 40 | 40 | 40 |
| | HEM A | 10 | 10 | 10 | 5 | 5 | 74 | 0 | 58 | 10 | 10 | 10 | 10 | 10 |
| | AMP S | 60 | 60 | 50 | 30 | 55 | 26 | 26 | 0 | 50 | 50 | 50 | 50 | 50 |
| Filler | D50 | 150 | 150 | 150 | 150 | 150 | 150 | 150 | 150 | 150 | 150 | 150 | 150 | 150 |
| | Weig ht ratio | 1:0.67 | 1:0.67 | 1:0.67 | 1:0.67 | 1:0.67 | 1:0.67 | 1:0.67 | 1:0.67 | 1:0.67 | 1:0.67 | 1:0.67 | 1:0.67 | 1:0.67 |
| Crosslinki ng agent | Type | Aziridine | Aziridine | Aziridine | Aziridine | Aziridine | Aziridine | Aziridine | Aziridine | No | No | Epoxy | CDI | Aziridine |
| | pbw | 10 | 10 | 10 | 10 | 10 | 10 | 10 | 10 | 0 | 0 | 10 | 10 | 10 |
| Adhesive binder | | Crosslink ed PMMA | Crosslink ed PMMA | Crosslink ed PMMA | Crosslink ed PMMA | Crosslink ed PMMA | Crosslink ed PMMA | Crosslink ed PMMA | Crosslink ed PMMA | Crosslink ed PMMA | Crosslink ed PMMA | Crosslink ed PMMA | Crosslink ed PMMA | Non-crosslink ed CMC |
| Thickness of coating layer | | 3 | 2 | 3 | 3 | 3 | 3 | 3 | 3 | 3 | 2 | 3 | 3 | 3 |
| Air permeability | | 130 | 127 | 130 | 131 | 129 | 180 | 180 | 180 | 131 | 126 | 130 | 131 | 130 |
| Electrolyte shrinkage rate | MD | 5 | 6 | 5 | 5 | 5 | 26 | 25 | 26 | 50 | 50 | 50 | 50 | 6 |
| | TD | 5 | 6 | 5 | 5 | 5 | 25 | 26 | 26 | 50 | 50 | 50 | 50 | 6 |
| Wet adhesion | | 0.82 | 0.77 | 0.83 | 0.85 | 0.80 | 0.80 | 0.79 | 0.80 | 0.83 | 0.55 | 0.80 | 0.79 | 0.02 |
| Membrane resistance | | 0.61 | 0.57 | 0.60 | 0.61 | 0.60 | 0.95 | 0.90 | 0.93 | 0.62 | 0.65 | 0.63 | 0.67 | 0.65 |
| Bending strength | | 450 | 400 | 450 | 450 | 430 | 450 | 450 | 450 | 450 | 390 | 450 | 450 | 50 |

As shown in Table 2 above, the separators for a rechargeable lithium battery according to the examples can increase the reliability of a rechargeable lithium battery by securing desired or improved air permeability, a low heat shrinkage rate in an electrolyte, low membrane resistance, and bending strength.

## Claims

1. A separator (30) for a rechargeable battery (100), the separator comprising:

   a porous substrate (1); and
   a coating layer (2) located on at least one surface of the porous substrate (1);
   wherein the coating layer (2) includes a crosslinked product of a binder and a crosslinking agent, and a filler (3),
   the binder includes a (meth)acrylic binder which includes a first structural unit derived from (meth)acrylic acid, (meth)acrylate, or a salt thereof, a second structural unit derived from a hydroxyalkyl (meth)acrylate, and a third structural unit derived from (meth)acrylamidosulfonic acid or a salt thereof,
   the crosslinking agent includes an aziridine-based crosslinking agent, and
   the filler (2) has a particle size (D50) in a range of 150 nm to 200 nm measured using a laser diffraction method.

2. The separator (30) of claim 1,

   wherein the coating layer (2) further includes an adhesive binder (5),
   and wherein
   the adhesive binder (5) is a crosslinked (meth)acrylic adhesive binder.

3. The separator (30) of claim 1 or 2, wherein the aziridine-based crosslinking agent includes one or more of N,N'-toluene-2,4-bis(1-aziridinecarboxamide), N,N'-(methylenedi-p-phenylene)bis(aziridine-1-carboxamide), triethylenemelamine, 1,1-isophthaloyl bis(2-methylaziridine), tris(1-aziridinyl)phosphine oxide, N,N-hexamethylene-bis(aziridine carboxamide), trimethylolpropane tris(2-methyl-1-aziridinepropionate), trimethylolpropane tris(beta-N-aziridinyl)propionate, and pentaerythritol tris(3-(1-aziridinyl)propionate).

4. The separator (30) of any one of the preceding claims, wherein the crosslinking agent is included at a range of 5 parts by weight to 50 parts by weight with respect to 100 parts by weight of the (meth)acrylic binder.

5. The separator (30) of any one of the preceding claims, wherein the filler is boehmite.

6. The separator (30) of any one of the preceding claims, wherein the (meth)acrylic binder and the filler (3) are included in a mass ratio in a range of 1:10 to 1:50.

7. The separator (30) of any one of the preceding claims, wherein the first structural unit is represented by at least one of Chemical Formula 1, Chemical Formula 2, Chemical Formula 3, and a combination thereof:

   Chemical Formula 1: Chemical Formula 2: Chemical Formula 3:

   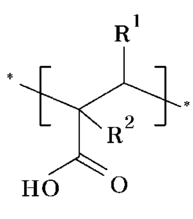 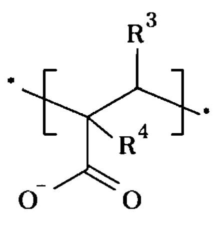 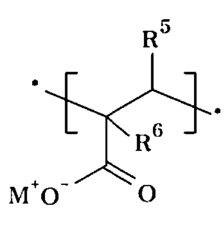 ;

   wherein the second structural unit is represented by Chemical Formula 4:

Chemical Formula 4:

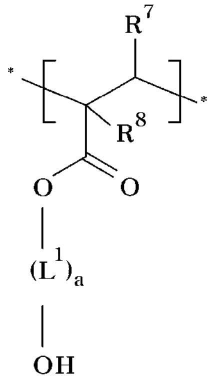

;

wherein the third structural unit is represented by at least one of Chemical Formula 5, Chemical Formula 6, Chemical Formula 7, and a combination thereof:

Chemical Formula 5:

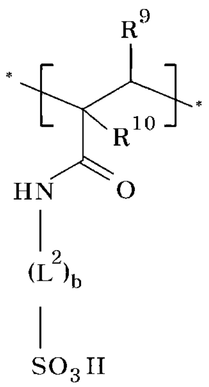

Chemical Formula 6:

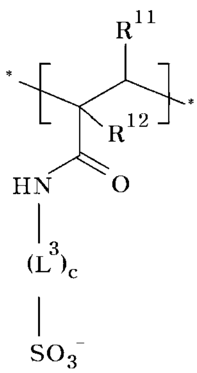

Chemical Formula 7:

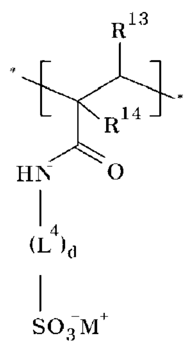

,

$R^1$ to $R^{14}$ each independently comprises hydrogen or a C1 to C10 alkyl group,
$L^1$ to $L^4$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
a, b, c, and d are each independently an integer from 0 to 2, and
M comprises an alkali metal,
wherein "substituted" refers to substituting at least one hydrogen of a compound with a substituent selected from a group consisting of any one of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxyl group (-OH), a nitro group ($-NO_2$), a cyano group (-CN), an amino group (-NRR') (here, R and R' are each independently hydrogen or a C1 to C6 alkyl group), a sulfobetaine group ($-RR'N^+(CH_2)_nSO_3^-$, n is a natural number from 1 to 10), a carboxybetaine group ($-RR'N^+(CH_2)_nCOO^-$, n is a natural number from 1 to 10) (here, R and R' are each independently a C1 to C20 alkyl group), an azido group ($-N_3$), an amidino group ($-C(=NH)NH_2$), a hydrazine group ($-NHNH_2$), a hydrazono group ($=N(NH_2)$), a carbamoyl group ($-C(O)NH_2$), a thiol group (-SH), an acyl group (-C(=O)R, and here, R is hydrogen, a C1 to C6 alkyl group, a C1 to C6 alkoxy group, or a C6 to C12 aryl group), a carboxyl group (-COOH) or a salt thereof (-C(=O)OM, and here, M is an organic or inorganic cation), a sulfonic acid group ($-SO_3H$) or a salt thereof ($-SO_3M$, and here, M is an organic or inorganic cation), and a phosphoric acid group ($-PO_3H_2$) or a salt thereof ($-PO_3MH$ or $-PO_3M_2$, and here, M is or includes an organic or inorganic cation).

**8.** The separator (30) of any one of claims 1 to 7, wherein the (meth)acrylic binder is represented by Chemical Formula 8:

Chemical Formula 8:

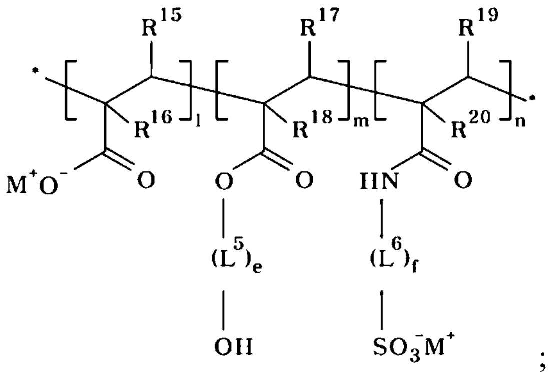

;

wherein:

$R^{15}$ to $R^{20}$ each independently comprises hydrogen or a C1 to C10 alkyl group,
$L^5$ and $L^6$ each independently comprises a substituted or unsubstituted C1 to C10 alkylene group, a substituted or unsubstituted C3 to C20 cycloalkylene group, a substituted or unsubstituted C6 to C20 arylene group, or a substituted or unsubstituted C3 to C20 heterocyclic group,
M comprises an alkali metal, and
l, m and n are molar ratios of the units, and satisfy l+m+n=1,
e and f are each independently an integer from 0 to 2,
wherein "substituted" refers to substituting at least one hydrogen of a compound with a substituent selected from a group consisting of any one of a C1 to C30 alkyl group, a C2 to C30 alkenyl group, a C2 to C30 alkynyl group, a C6 to C30 aryl group, a C7 to C30 alkylaryl group, a C1 to C30 alkoxy group, a C1 to C30 heteroalkyl group, a C3 to C30 heteroalkylaryl group, a C3 to C30 cycloalkyl group, a C3 to C15 cycloalkenyl group, a C6 to C30 cycloalkynyl group, a C2 to C30 heterocycloalkyl group, a halogen (F, Cl, Br, or I), a hydroxyl group (-OH), a nitro group ($-NO_2$), a cyano group (-CN), an amino group (-NRR') (here, R and R' are each independently hydrogen or a C1 to C6 alkyl group), a sulfobetaine group ($-RR'N^+(CH_2)_nSO_3^-$, n is a natural number from 1 to 10), a carboxybetaine group ($-RR'N^+(CH_2)_nCOO^-$, n is a natural number from 1 to 10) (here, R and R' are each independently a C1 to C20 alkyl group), an azido group ($-N_3$), an amidino group ($-C(=NH)NH_2$), a hydrazine group ($-NHNH_2$), a hydrazono group ($=N(NH_2)$, a carbamoyl group ($-C(O)NH_2$), a thiol group (-SH), an acyl group (-C(=O)R, and here, R is hydrogen, a C1 to C6 alkyl group, a C1 to C6 alkoxy group, or a C6 to C12 aryl group), a carboxyl group (-COOH) or a salt thereof (-C(=O)OM, and here, M is an organic or inorganic cation), a sulfonic acid group ($-SO_3H$) or a salt thereof ($-SO_3M$, and here, M is an organic or inorganic cation), and a phosphoric acid group ($-PO_3H_2$) or a salt thereof ($-PO_3MH$ or $-PO_3M_2$, and here, M is or includes an organic or inorganic cation).

**9.** The separator (30) of any one of the preceding claims, wherein the first structural unit is included at a range of 20 mol% to 75 mol%, the second structural unit is included at a range of 1 mol% to 20 mol%, and the third structural unit is included at a range of 20 mol% to 75 mol% with respect to 100 mol% of the (meth)acrylic binder.

**10.** The separator (30) of any one of the preceding claims, wherein the total of the first structural unit, the second structural unit, and the third structural unit is included at 95 mol% or more with respect to 100 mol% of the (meth)acrylic binder.

**11.** The separator (30) of any one of the preceding claims, wherein the aziridine-based crosslinking agent is included at 95 wt% or more of the entire crosslinking agent in a composition of the coating layer (2).

**12.** The separator (30) of any one of the preceding claims, wherein the filler (3) is included at 95 wt% or more of the entire filler (3) in a composition for the coating layer (2).

**13.** The separator (30) of any one of the preceding claims, wherein the coating layer (2) has a thickness in a range of 0.1 µm to 2 µm.

**14.** A rechargeable battery (100), comprising:

a positive electrode (10);
a negative electrode (20); and
the separator (30) of claim 1 located between the positive electrode (10) and the negative electrode (20).

FIG. 1

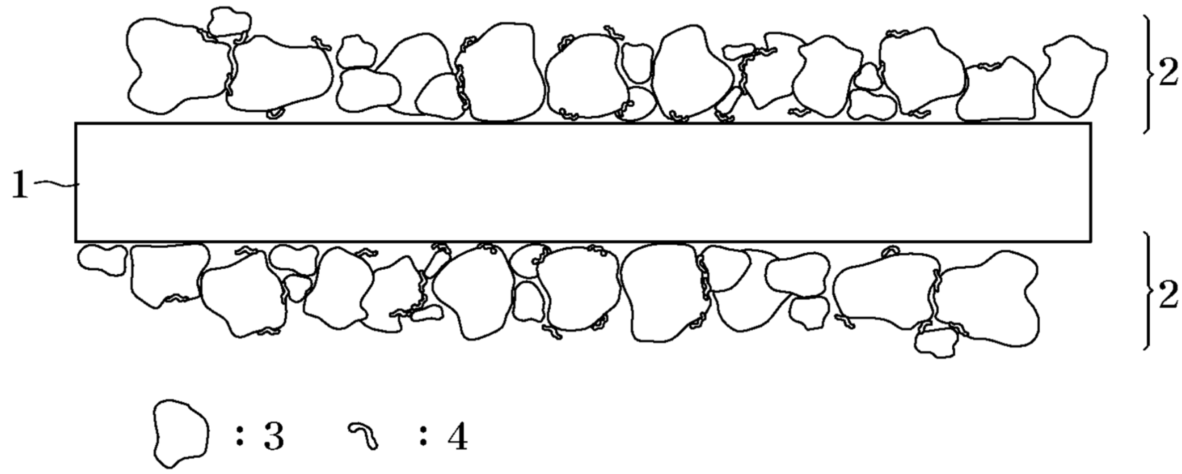


FIG. 2

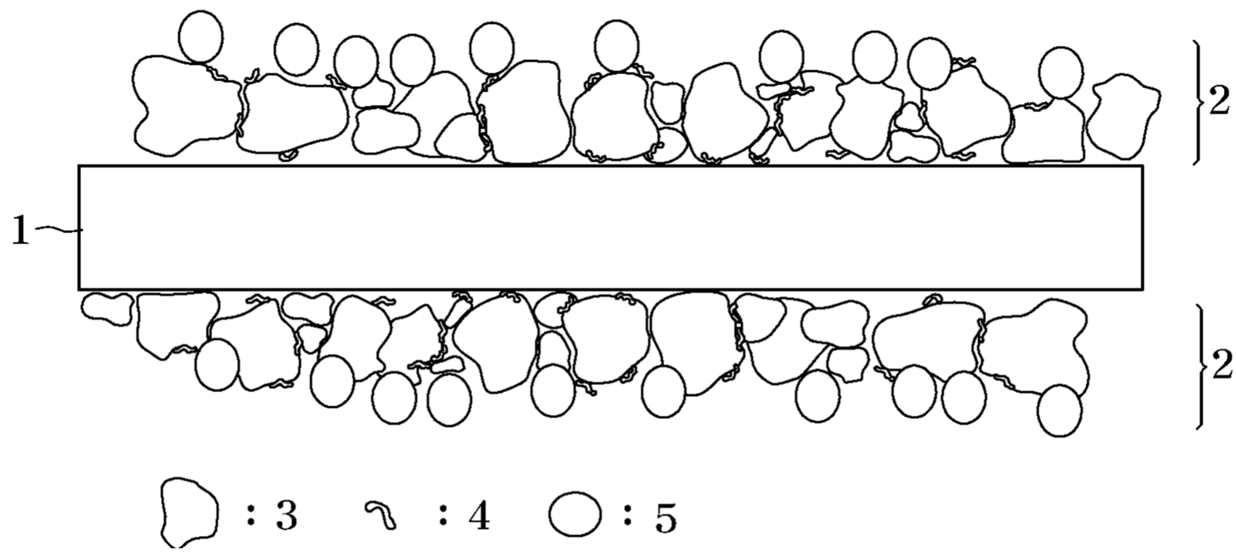

FIG. 3

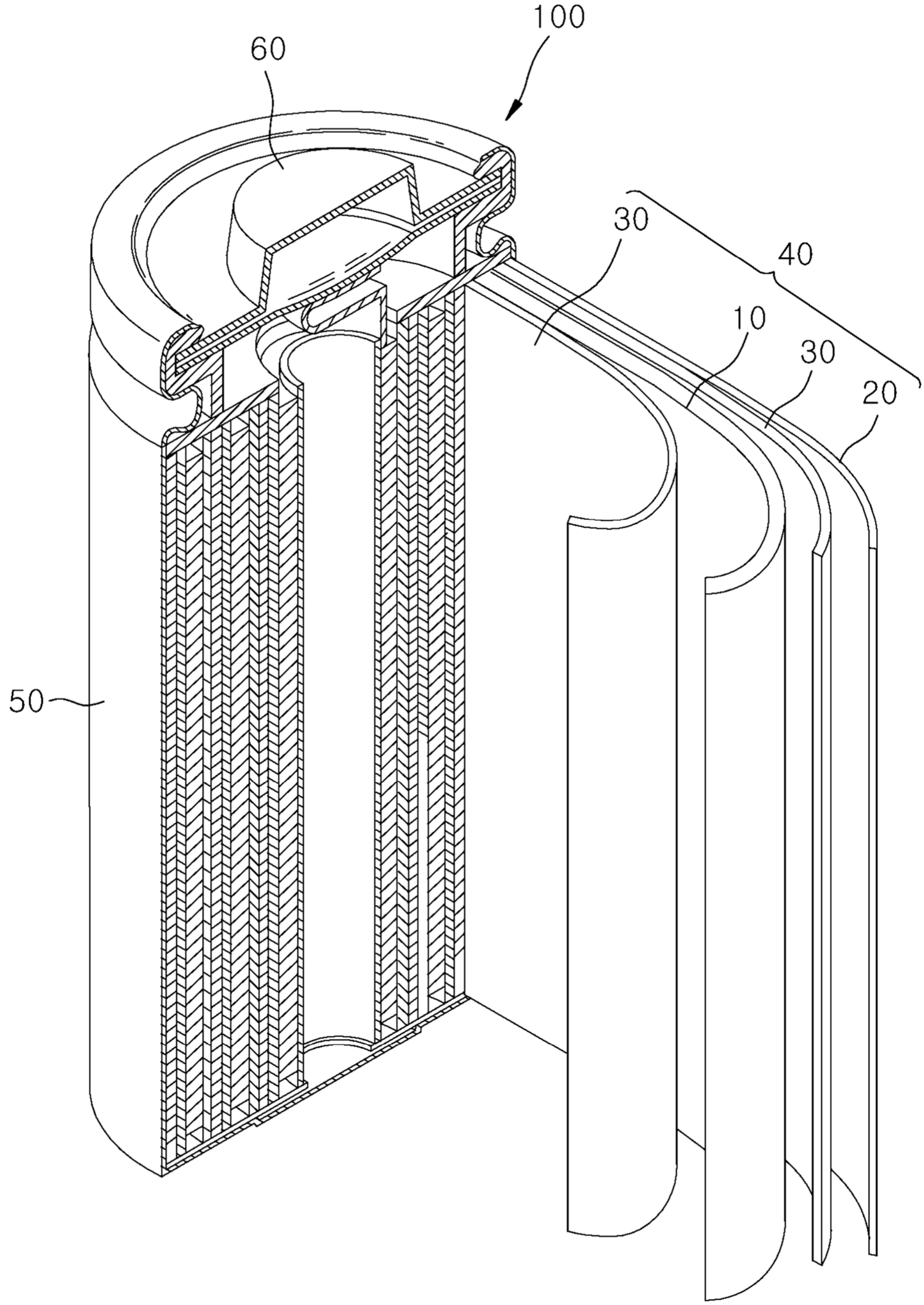

FIG. 4

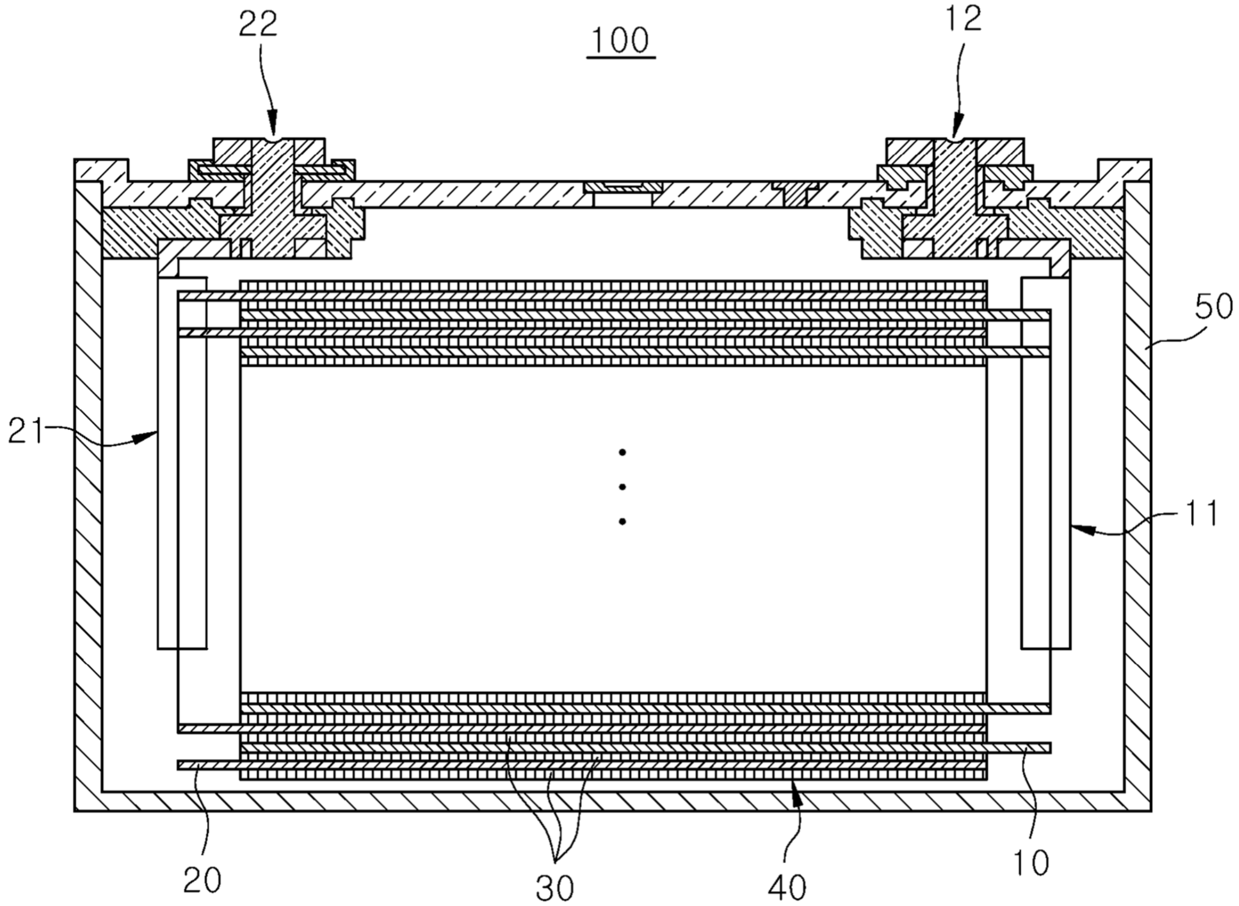

FIG. 5

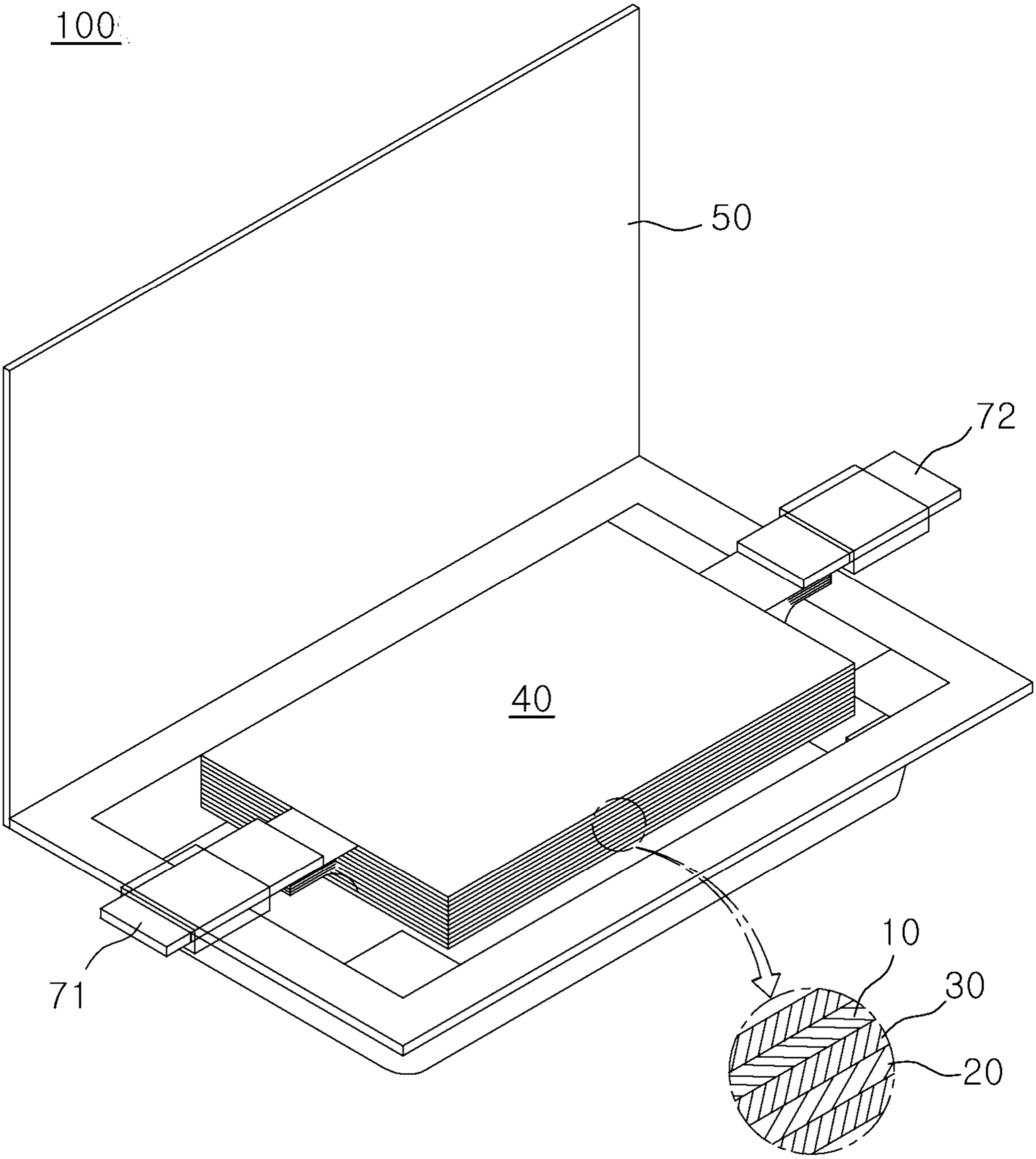

FIG. 6

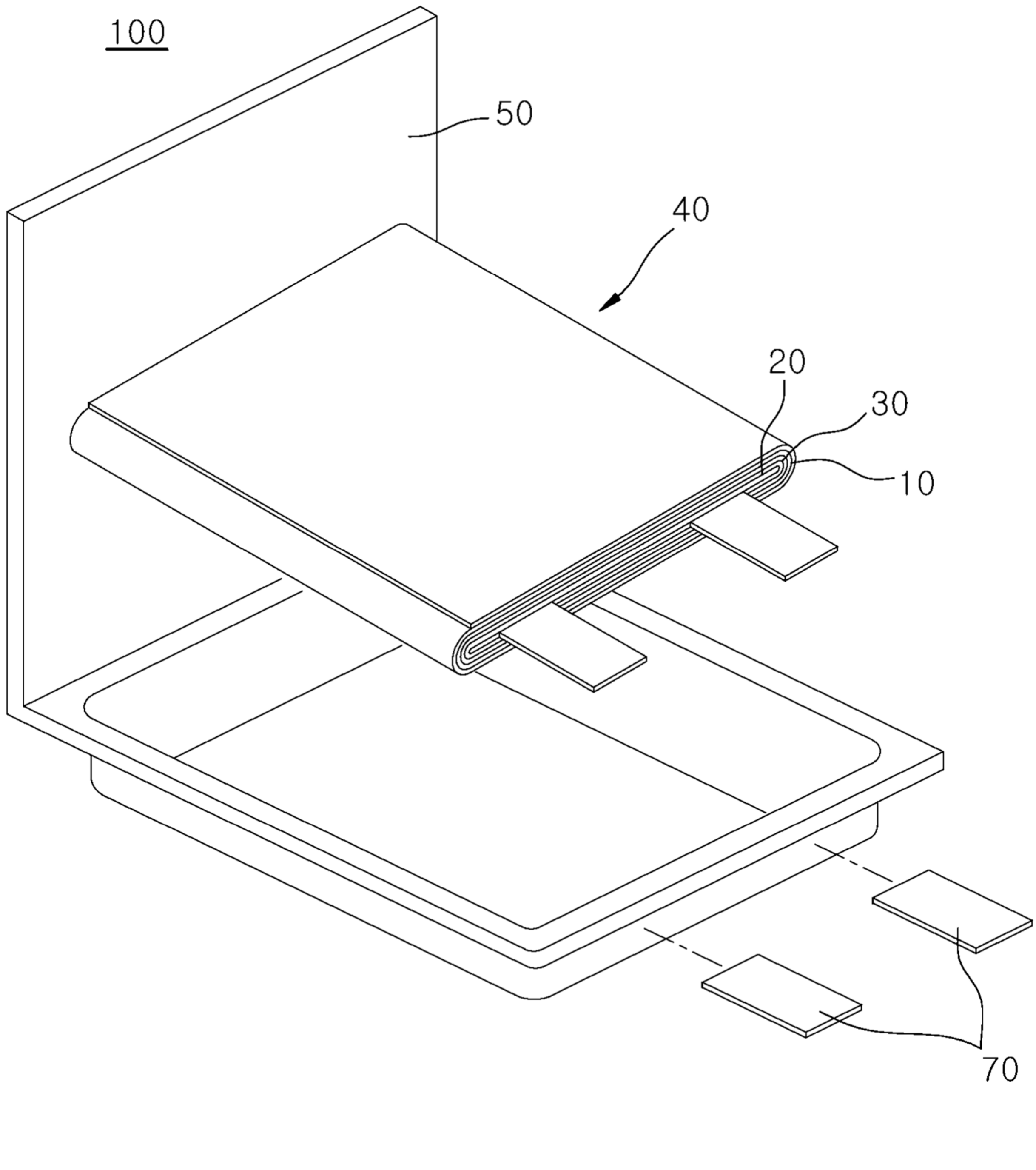

FIG. 7

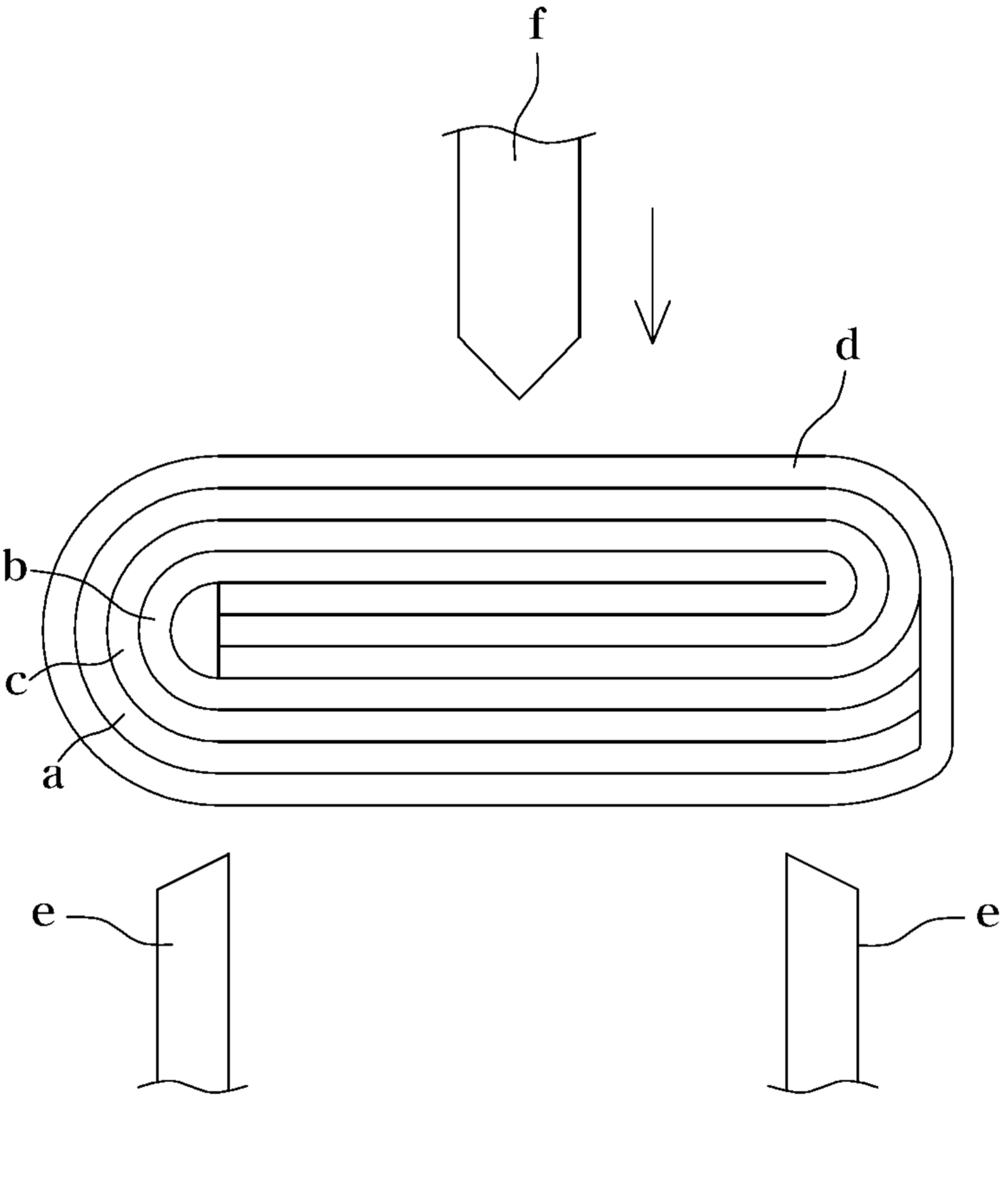

Europäisches Patentamt
European Patent Office
Office européen des brevets

# EUROPEAN SEARCH REPORT

Application Number

EP 25 21 5764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2023/219366 A1 (SAMSUNG SDI CO LTD [KR]) 16 November 2023 (2023-11-16) * paragraphs [0007], [0058] - [0063], [0068] - [0099], [0123] - [0166]; figures 1-4; example 1 * & EP 4 525 183 A1 (SAMSUNG SDI CO LTD [KR]) 19 March 2025 (2025-03-19) ----- | 1-14 | INV. H01M50/42 H01M50/443 H01M50/446 H01M50/449 H01M50/46 |
| Y | US 2024/145866 A1 (KIM SOOHEE [KR] ET AL) 2 May 2024 (2024-05-02) * paragraphs [0010] - [0018], [0032], [0040] - [0099], [0111] - [0112], [0136] - [0168]; figures 1-3; example 1 * ----- | 1-14 | |
| Y | KR 2023 0126985 A (SAMSUNG SDI CO LTD [KR]) 31 August 2023 (2023-08-31) * paragraphs [0033] - [0090], [0127] - [0128], [0132] - [0165], [0172]; figures 1-3 * ----- | 1-14 | |
| Y | US 2014/186680 A1 (KIM KEE-YOUNG [KR] ET AL) 3 July 2014 (2014-07-03) * paragraphs [0009] - [0012], [0055] - [0056]; figure 1 * ----- | 1-14 | TECHNICAL FIELDS SEARCHED (IPC) H01M |
| Y | KR 2013 0139200 A (LG CHEMICAL LTD [KR]) 20 December 2013 (2013-12-20) * paragraphs [0003], [0012] - [0015], [0030] - [0031] * ----- | 1-14 | |
| Y | KR 2013 0092245 A (LG CHEMICAL LTD [KR]) 20 August 2013 (2013-08-20) * paragraphs [0025], [0028] * ----- | 1-14 | |
| Y | US 2018/040868 A1 (JANG DAE SUNG [KR] ET AL) 8 February 2018 (2018-02-08) * paragraphs [0011] - [0019], [0044]; figure 1 * ----- -/-- | 1-14 | |

The present search report has been drawn up for all claims

2

| Place of search | Date of completion of the search | Examiner |
|---|---|---|
| The Hague | 24 March 2026 | Bravo Diaz, Laura |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 25 21 5764

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 677 590 A2 (LG CHEMICAL LTD [KR]; TORAY BATTERY SEPARATOR FILM [JP] ET AL.) 25 December 2013 (2013-12-25) * paragraphs [0011] - [0013], [0031]; figure 1 * ----- | 1-14 | |

TECHNICAL FIELDS SEARCHED (IPC)

The present search report has been drawn up for all claims

2

| Place of search | Date of completion of the search | Examiner |
|---|---|---|
| The Hague | 24 March 2026 | Bravo Diaz, Laura |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO. EP 25 21 5764

This annex lists the patent family members relating to the patent documents cited in the above-mentioned European search report. The members are as contained in the European Patent Office EDP file on
The European Patent Office is in no way liable for these particulars which are merely given for the purpose of information.

24-03-2026

| Patent document cited in search report | Publication date | Patent family member(s) | Publication date |
|---|---|---|---|
| WO 2023219366 A1 | 16-11-2023 | CN 119174045 A | 20-12-2024 |
| | | EP 4525183 A1 | 19-03-2025 |
| | | KR 20230157182 A | 16-11-2023 |
| | | US 2025329872 A1 | 23-10-2025 |
| | | WO 2023219366 A1 | 16-11-2023 |
| US 2024145866 A1 | 02-05-2024 | KR 20220155022 A | 22-11-2022 |
| | | US 2024145866 A1 | 02-05-2024 |
| | | US 20260058310 A1 | 26-02-2026 |
| | | WO 2022240227 A1 | 17-11-2022 |
| KR 20230126985 A | 31-08-2023 | NONE | |
| US 2014186680 A1 | 03-07-2014 | CN 104521031 A | 15-04-2015 |
| | | EP 2869363 A1 | 06-05-2015 |
| | | JP 6120300 B2 | 26-04-2017 |
| | | JP 2015536030 A | 17-12-2015 |
| | | KR 20140044757 A | 15-04-2014 |
| | | TW 201436342 A | 16-09-2014 |
| | | US 2014186680 A1 | 03-07-2014 |
| | | WO 2014054919 A1 | 10-04-2014 |
| KR 20130139200 A | 20-12-2013 | NONE | |
| KR 20130092245 A | 20-08-2013 | NONE | |
| US 2018040868 A1 | 08-02-2018 | KR 20160125921 A | 01-11-2016 |
| | | US 2018040868 A1 | 08-02-2018 |
| | | WO 2016171519 A1 | 27-10-2016 |
| EP 2677590 A2 | 25-12-2013 | EP 2677590 A2 | 25-12-2013 |
| | | TW 201246663 A | 16-11-2012 |
| | | WO 2012111956 A2 | 23-08-2012 |

EPO FORM P0459

For more details about this annex : see Official Journal of the European Patent Office, No. 12/82